(19) Europäisches Patentamt
European Patent Office
Office européen des brevets

(11) **EP 1 136 344 B1**

(12) **EUROPEAN PATENT SPECIFICATION**

(45) Date of publication and mention
of the grant of the patent:
**08.08.2007 Bulletin 2007/32**

(51) Int Cl.:
***B62D 7/15*** (2006.01)   ***B62D 6/00*** (2006.01)

(21) Application number: **01302671.1**

(22) Date of filing: **22.03.2001**

(54) **Vehicle front/rear wheel angle controlling system and its controlling method**

Kraftfahrzeugvorder- und -hinterradlenkwinkelsteuereinrichtung und ihr Steuerverfahren

Système de commande pour les angles des roues d'un véhicule avant et arrière et son procédé de commande

(84) Designated Contracting States:
**DE FR GB**

(30) Priority: **23.03.2000 JP 2000082465**
       **27.09.2000 JP 2000295051**

(43) Date of publication of application:
**26.09.2001 Bulletin 2001/39**

(73) Proprietor: **NISSAN MOTOR COMPANY LIMITED**
**Yokohama-shi Kanagawa 221-0023 (JP)**

(72) Inventors:
 • **Obata, Takeaki**
   **Yokosuka-shi,**
   **Kanagawa-ken (JP)**
 • **Deguchi, Yoshitaka**
   **Kounan-ku,**
   **Yokohama-shi (JP)**
 • **Takahashi, Nobutaka**
   **Yokohama-shi,**
   **Kanagawa-ken (JP)**

(74) Representative: **Godwin, Edgar James**
   **Marks & Clerk**
   **90 Long Acre**
   **London WC2E 9RA (GB)**

(56) References cited:
   **US-A- 5 047 939**

 • **PATENT ABSTRACTS OF JAPAN vol. 011, no. 347 (M-641), 13 November 1987 (1987-11-13) -& JP 62 125952 A (ISUZU MOTORS LTD), 8 June 1987 (1987-06-08)**
 • **PATENT ABSTRACTS OF JAPAN vol. 010, no. 204 (M-499), 17 July 1986 (1986-07-17) -& JP 61 046765 A (NISSAN MOTOR CO LTD), 7 March 1986 (1986-03-07)**

## Description

The present invention relates to a vehicle front/rear wheel angle controlling system and its controlling method.

In the prior art, the vehicle rear wheel angle control system as set forth in Patent Application Publication (KOKAI) Hei 2-74473 has been well known. In this prior art, in order to achieve the predetermined turning radius of the vehicle, the main rear wheel angle that is calculated by multiplying the front wheel angle decided by the steering operation of the driver by a predetermined ratio should be restricted such that a fixed point **B** located near the rear end portion of the vehicle can enter into the inside area of a locus of a fixed point **A** located near the front end portion of the vehicle.

JP 62125952 A discloses a vehicle front/near wheel angle controlling system and method in accordance with the preambles of the independent claims.

SUMMARY OF THE INVENTION

However, in such prior art, since such a configuration that a rear wheel angle is switched according to relative dimensions of the main rear wheel angle and the restricted value of the rear wheel angle is employed, there were problems described in the following.

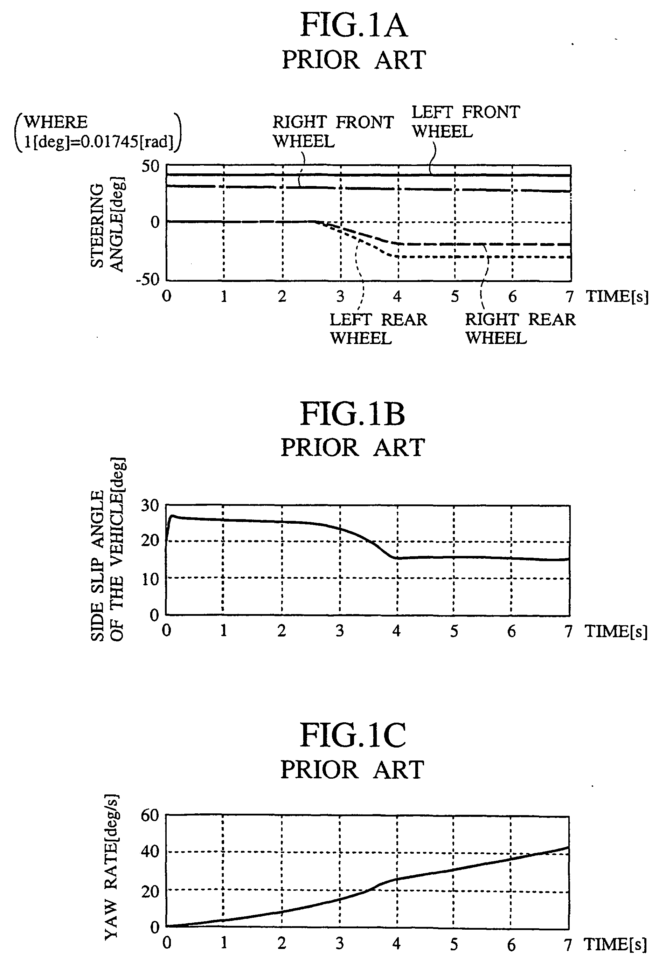

FIGS. 1A to 1C show the results of the simulation made in the prior art. A side slip angle of the vehicle and a yaw rate are changed when the rear wheel angle is switched. Therefore, there was the problem that the driver feels a feeling of physical disorder.

Also, the locus of the fixed point **A** near the front end portion of the vehicle must be calculated based on the ground coordinate. Thus, calculation of the center-of-gravity point of the vehicle and calculation of the yaw angle of the vehicle must be carried out. Therefore, there also was the problem that the calculation becomes complicated.

The present invention has been made in view of such problems in the prior art, and it is an object of the present invention to provide a vehicle front/rear wheel angle controlling system and its controlling method, capable of facilitating calculation of a target turning center position and also limiting a protruding distance of the rear end of the vehicle toward the right/left side direction while achieving a predetermined turning radius when the vehicle is in its turning motion.

In order to achieve the above object, there is provided a vehicle front/rear wheel angle controlling system having a unit for controlling independently front/rear wheel angles respectively, the system comprising: target turning radius calculating portion for calculating a target turning radius based on an amount of steering operation; a target turning center position calculating portion for calculating a target turning center position during turning of the vehicle based on the target turning radius on a straight line that intersects orthogonally with a longitudinal axis line of the vehicle and passes through the rear end of the vehicle, so as to restrict an amount of protrusion of a rear end portion in right/left side surface directions during the turning of the vehicle; and a front/rear wheel angle command value calculating portion for calculating command values of the front/rear wheel angles so as to achieve the target turning center position.

Also, in order to achieve the above object, there is provided a vehicle front/rear wheel angle controlling system having a unit for controlling independently front/rear wheel angles respectively, the system comprising: a target turning radius calculating portion for calculating a target turning radius based on an amount of steering operation;

a target turning center position calculating portion for calculating a target turning center position based on the target turning radius as a position on a straight line that intersects orthogonally with a longitudinal axis line of the vehicle and passes through the rear end of the vehicle in an initial stage of a turning of the vehicle and as a position that moves gradually in the forward direction of the vehicle with progress of the turning, so as to restrict an amount of protrusion of a rear end portion in right/left side surface directions during the turning of the vehicle; and

a front/rear wheel angle command value calculating portion for calculating command values of the front/rear wheel angles so as to achieve the target turning center position.

Also, in order to achieve the above object, there is provided a vehicle front/rear wheel angle controlling method using a unit for controlling independently front/rear wheel angles respectively, the method comprising: calculating a target turning radius based on an amount of steering operation; calculating a target turning center position during turning of the vehicle based on the target turning radius on a straight line that intersects orthogonally with a longitudinal axis line of a vehicle and passes through the rear end of the vehicle, so as to restrict an amount of protrusion of a rear end portion in right/left side surface directions during the turning of the vehicle; and calculating command values of the front/ rear wheel angles so as to achieve the target turning center position.

Also, in order to achieve the above object, there is provided a vehicle front/rear wheel angle controlling method using a unit for controlling independently front/rear wheel angles respectively, the method comprising: calculating a target turning radius based on an amount of steering operation; calculating a target turning center position based on the target turning radius as a position on a straight line that intersects orthogonally with a longitudinal axis line of the vehicle and passes through the rear end of the vehicle in an initial stage of a turning of the vehicle and as a position that moves gradually in a forward direction of the vehicle with progress of the turning, so as to restrict an amount of protrusion of a rear end portion in right/left side surface directions during the turning of the vehicle; and calculating command values of the front/rear wheel angles so as to achieve the target turning center position.

Also, in order to achieve the above object, there is provided a vehicle front/rear wheel angle controlling system having a unit for controlling independently a wheel-turning angle of front wheels and a wheel-turning angle of rear wheels respectively, the system comprising: a target turning radius calculating portion for calculating a target turning radius (Re) of a reference point (P) on a vehicle based on an amount of steering operation; a target posture angle calculating portion for calculating a target posture angle ($\beta$) of the reference point (P); and a target wheel-turning angle calculating portion for calculating target wheel-turning angles of front/rear wheels based on the target turning radius (Re) and the target posture angle ($\beta$), and also calculating the target wheel-turning angles of the front/rear wheels by correcting the target wheel-turning angles to cause a wheel-turning center point (Q) to come up to the vehicle with respect to the target wheel-turning angles of the front/rear wheels obtained when the target posture angle is fixed constant while the target posture angle ($\beta$) is increased, and by correcting the target wheel-turning angles to cause the wheel-turning center point (Q) to go away from the vehicle with respect to the target wheel-turning angles of the front/rear wheels obtained when the target posture angle is fixed constant while the target posture angle ($\beta$) is decreased.

Also, in order to achieve the above object, there is provided a vehicle front/rear wheel angle controlling method for controlling independently a wheel-turning angle of front wheels and a wheel-turning angle of rear wheels respectively, the method comprising: calculating a target turning radius (Re) of a reference point (P) on a vehicle based on an amount of steering operation; calculating a target posture angle ($\beta$) of the reference point (P); calculating target wheel-turning angles of front/rear wheels based on the target turning radius (Re) and the target posture angle ($\beta$); and calculating the target wheel-turning angles of the front/rear wheels by correcting the target wheel-turning angles to cause a wheel-turning center point (Q) to come up to the vehicle with respect to the target wheel-turning angles of the front/rear wheels obtained when the target posture angle is fixed constant while the target posture angle ($\beta$) is increased, and by correcting the target wheel-turning angles to cause the wheel-turning center point (Q) to go away from the vehicle with respect to the target wheel-turning angles of the front/rear wheels obtained when the target posture angle is fixed constant while the target posture angle ($\beta$) is decreased.

The nature, principle and utility of the invention will become more apparent from the following detailed description when read in conjunction with the accompanying drawings.

BRIEF DESCRIPTION OF THE DRAWINGS

In the accompanying drawings:

FIGS. 1A to 1C are graphs showing a steering angle, a side slip angle of the vehicle, and a yaw rate based on a simulation of the front/rear wheel steering control in the prior art, respectively;

FIG.2 is a view showing a configuration of a vehicle drive controlling system to which a vehicle front/rear wheel angle controlling system and its controlling method according to a first embodiment of the present invention are applied;

FIG.3 is a block diagram showing a configuration of a vehicle front/rear wheel angle controlling unit in the first embodiment;

FIG. 4 is a flowchart showing a main routine of a vehicle front/rear wheel angle controlling method in the first embodiment;

FIG.5 is a flowchart showing an example of a routine for calculating a target turning center position in the first embodiment;

FIG.6 is a flowchart showing another example of the routine for calculating the target turning center position in the first embodiment;

FIG.7 is a flowchart showing still another example of the routine for calculating the target turning center position in the first embodiment;

FIG.8 is a view showing a vehicle-fixed coordinate system in the first embodiment;

FIG. 9 is a view showing a movement of the target turning center position in the first embodiment;

FIG.10 is a view showing a vehicle moving locus based on a simulation of the front/rear wheel steering control in the first embodiment;

FIGS. 11A to 11C are graphs showing a steering angle, a side slip angle of the vehicle, and a yaw rate based on a simulation of the front/rear wheel steering control in the first embodiment, respectively;

FIG. 12 is a view showing a vehicle moving locus based on another simulation of the front/rear wheel steering control in the first embodiment;

FIGS.13A to 13C are graphs showing a steering angle, a side slip angle of the vehicle, and a yaw rate based on another simulation of the front/rear wheel steering control in the first embodiment, respectively;

FIG.14 is a view showing a control system in the first embodiment;

FIG.15 is a view showing an example of simulation conditions to explain a problem in the first embodiment;

FIG.16 is a view showing an example of a simulation result to explain the problem in the first embodiment;

FIG. 17 is a view showing a configuration of a vehicle drive controlling system to which a vehicle front/rear wheel angle controlling system and its controlling method according to a second embodiment of the present invention are applied;

FIG.18 is a block diagram showing a configuration of a vehicle front/rear wheel angle controlling unit in the second embodiment;

FIG.19 is a schematic flowchart showing an operation of the vehicle front/rear wheel angle controlling system in the second embodiment;

FIG.20 is a view showing an example of generation of a target turning radius in the second embodiment;

FIG.21 is a view showing an example of generation of a target posture angle in the second embodiment;

FIG.22 is a view showing an example of a simulation result in the second embodiment;

FIG.23 is a flowchart 1 for calculating a target wheel-turning center in the second embodiment;

FIG.24 is a flowchart 2 for calculating the target wheel-turning center in the second embodiment;

FIG.25 is a view showing a wheel-turning angle calculating method of respective wheels in the second embodiment;

FIG.26 is a view showing a configuration of a vehicle front/rear wheel angle controlling system and its controlling method according to a third embodiment of the present invention are applied;

FIG.27 is a view showing an available range of the wheel-turning center in the third embodiment; and

FIG.28 is a view showing definitions of respective terms used in the present invention.

## DESCRIPTION OF THE PREFERRED EMBODIMENTS

Embodiments of the present invention will be explained with reference to the accompanying drawings hereinafter.

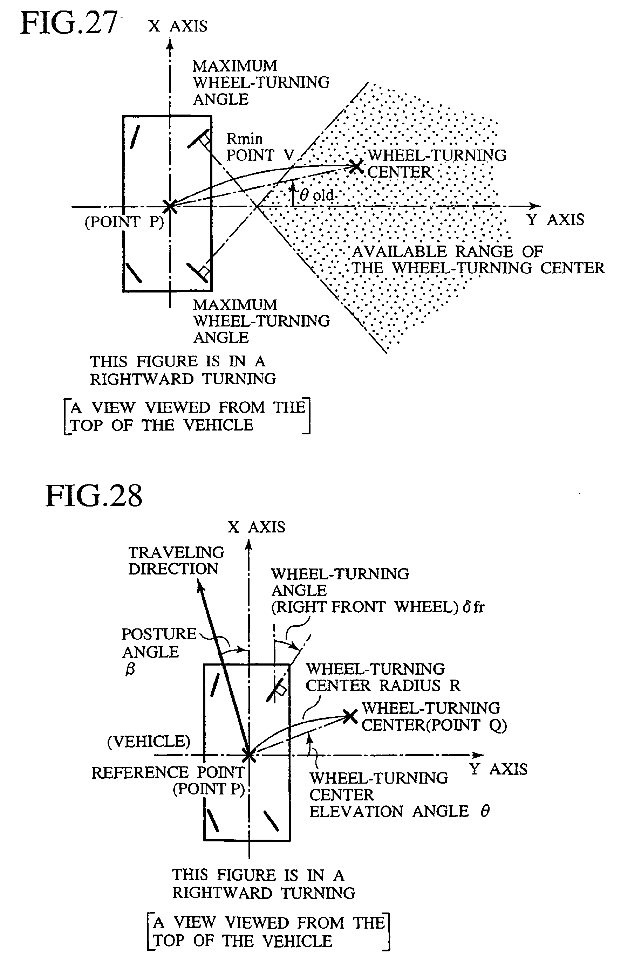

Therefore, definitions of respective terms used in the present specification will be first clarified with reference to FIG.28 hereunder.

♦ Reference point P of the vehicle

A reference point P of the vehicle is defined as a coordinate origin P that is fixed on the vehicle. The reference point P may be set at any position on the vehicle. Normally, for easy calculation, a bisected point of a line segment that connects a bisected point of the front axle and a bisected point of the rear axle is selected as the reference point. Also, a center-of-gravity point of the vehicle may be selected as the reference point P.

♦ Vehicle-fixed coordinate system

A vehicle-fixed coordinate system is defined as a coordinate system on which an origin, an x-axis and a y-axis are decided to be fixed to the vehicle, as shown in FIG.28. The reference point P of the vehicle is selected as the origin and, as shown in FIG.28, the longitudinal direction of the vehicle is selected as the x-axis and the lateral direction of the vehicle is selected as the y-axis. Where the turning direction of the vehicle is set as the positive direction of the y-axis (the right side of the y-axis is set as the positive side in FIG.28 since the vehicle is rightward turning). If the vehicle is leftward turning, the left side of the y-axis is set as the positive side.

♦ Posture angle

A posture angle is defined as an angle $\beta$ formed between the longitudinal direction of the vehicle (the x-axis in FIG.28) and the traveling direction of the reference point P on the vehicle, and the direction along the turning motion of the vehicle is defined as the positive side. In FIG. 28, since the vehicle is rightward turning, the right-handed direction (clockwise direction) is set as the positive direction. If the vehicle is leftward turning, the left-handed direction (anticlockwise direction) is set as the positive direction.

♦ Wheel-turning angle

A wheel-turning angle is defined as an angle formed between the x-axis and each wheel in FIG.28 (the wheel-turning angle of the right front wheel is shown as $\delta$ fr in FIG.28).

♦ Wheel-turning center

A wheel-turning center is defined as a point Q serving as a turning center on the vehicle-fixed coordinate if the vehicle is turned while maintaining constant the wheel-turning angles of the front/rear wheels of the vehicle.

♦ Wheel-turning center radius

A wheel-turning center radius is defined as a distance R between the reference point P on the vehicle and the wheel-turning center.

♦ Wheel-turning center elevation angle

A wheel-turning center elevation angle is defined as an angle θ formed between a line connecting the reference point P on the vehicle and the wheel-turning center Q and a line extended from the reference point P on the vehicle along the lateral direction of the vehicle (in parallel with the y-axis). Where the turning angle in the traveling direction of the vehicle is set as the positive (the anticlockwise direction is the positive direction if the vehicle is rightward turning, and the clockwise direction is the positive direction if the vehicle is leftward turning).

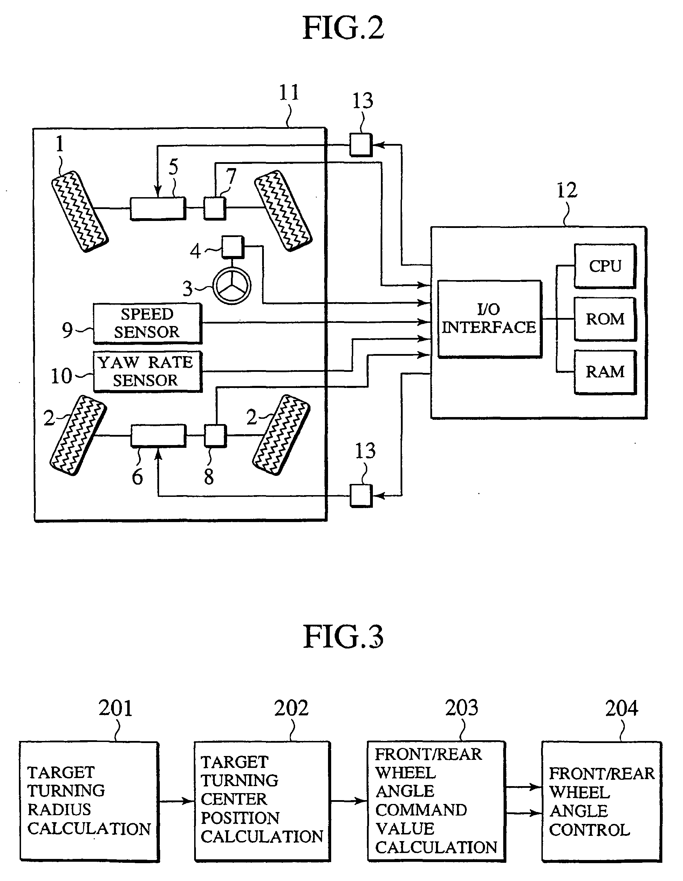

FIG.2 is a view showing a configuration of a vehicle drive controlling system to which a vehicle front/rear wheel angle controlling system and its controlling method according to a first embodiment of the present invention are applied.

In FIG.2, 1 is a front wheel, 2 is a rear wheel, 3 is a steering wheel operated by the driver, 4 is a steering angle sensor for sensing a steering angle of the steering wheel. For example, an encoder-type sensor for sensing a rotated angle of the column shaft is employed as the steering angle sensor. Also, 5 is a front wheel steering actuator, and 6 is a rear wheel steering actuator. An actuator for driving the steering shaft by using the DC motor or the induction motor is employed as these actuators. Also, 13 is a driving circuit for driving the front wheel steering actuator 5 and the rear wheel steering actuator respectively. Also, 7 is a steering angle sensor for sensing the front wheel angle, and 8 is a steering angle sensor for sensing the rear wheel angle. For example, the encoder-type sensor for sensing a rotated angle of the steering shaft is employed as these sensors.

Also, 9 is a speed sensor for sensing the speed of the vehicle 11 and measures the wheel speeds of respective wheels, for example. Also, 10 is a yaw rate sensor for sensing a yaw rate of the vehicle 11, and 12 is a front/rear wheel angle control unit constructed by a control circuit (ECU) using mainly a microcomputer, and executes input/output of the information from/to the external device and various calculations. The CPU in this unit executes the calculation, the ROM stores a control program, various data, etc. (described later), the RAM stores temporarily the information during the execution of the program, and the I/O interface executes the input of the information from the external sensor, etc. and the output of the signal to drive the external actuator.

FIG.3 shows controlling functions executed by the front/rear wheel angle control unit 12 as a block diagram in the first embodiment. The present control system 12 comprises a target turning radius calculating portion 201 for calculating a target turning radius, a target turning center position calculating portion 202 for calculating a target turning center position, a front/rear wheel angle command value calculating portion 203 for calculating command values of the front/rear wheel angles based on the target turning center position, and a front/rear wheel angle controlling portion 204 for controlling the front/rear wheel angles based on the command values of the front/rear wheel angles.

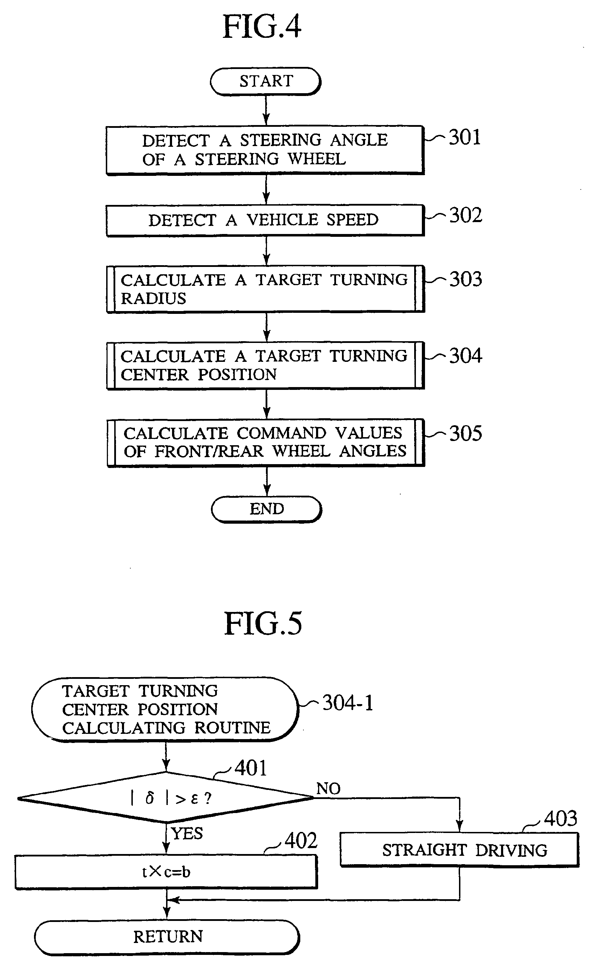

A controlling operation executed by the front/rear wheel angle control unit 12 according to the first embodiment of the present invention will be explained hereinafter. This front/rear wheel angle control can be implemented by executing a predetermined program by the microcomputer. A main routine of the controlling method to execute the operations in the first embodiment is shown in a flowchart of FIG.4. In this case, this control program is executed repeatedly every 10 msec, for example.

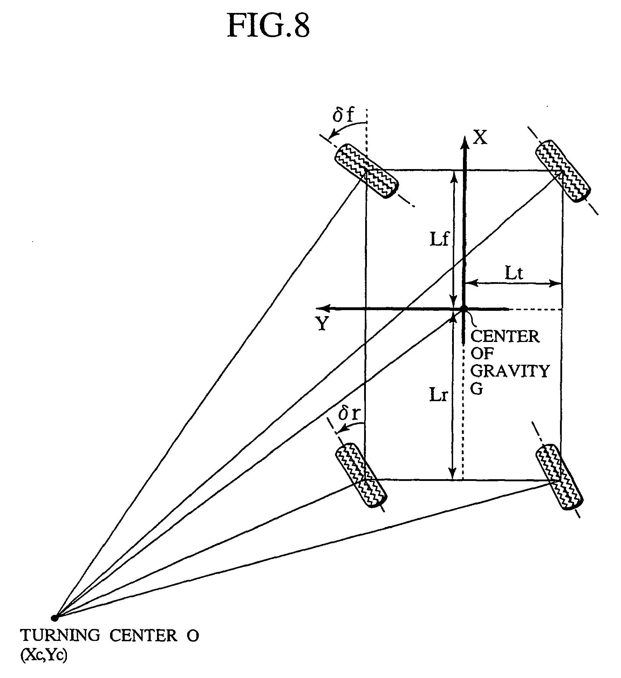

The steering angle δ of the steering wheel is detected based on an output of the steering angle sensor 4 in step 301, then the vehicle speed V is detected based on an output of the speed sensor 9 in step 302, then the target turning radius **tR** is calculated in step 303, and then the target turning center position is calculated in step 304. Here the vehicle-fixed coordinate system is decided as shown in FIG. 8, and then **tXc** as the X-coordinate of the target turning center position is calculated. Then, the front wheel angle command value δf and the rear wheel angle command value δr are calculated in step 305, and then the process is ended.

The process for executing the calculation of the target turning radius **tR** in step 303 will be explained hereunder. The target turning radius **tR** is calculated according to Eq. (1), based on the steering angle δ of the steering wheel and the vehicle speed V.

$$tR = \left(1 + AV^2\right)L\frac{N}{\delta}$$

$$\cdots \ (1)$$

Where A is a stability factor, L is a wheel base, and N is equivalent to a steering gear ratio. Also, if an absolute value of the steering angle $\delta$ is smaller than 5 [deg](= 0.0873 [rad]), for example, the calculation given by Eq.(1) is not calculated and the straight driving operation (both the front wheel angle and the rear wheel angle are set to 0 [deg]) is carried out. Also, the steering angle $\delta$ is positive when the steering wheel is operated in the left direction, and the steering angle $\delta$ is negative when the steering wheel is operated in the right direction. As a result, according to calculation, the target turning radius **tR** becomes positive when the vehicle is turned in the leftward direction and becomes negative when the vehicle is turned in the right direction. In this case, the target turning radius **tR** may be calculated by multiplying the target turning radius calculated by Eq.(1) by a predetermined coefficient, otherwise the target turning radius **tR** may be calculated by looking up the map data, that are decided previously based on the steering angle $\delta$ of the steering wheel and the vehicle speed V, without using the calculation equation such as Eq. (1). In other words, the process may be constructed such that the target turning radius **tR** can be set against the steering angle $\delta$ of the steering wheel to have a desired characteristic.

Then, the process for calculating the X-coordinate **tXc** of the target turning center position in step 304 will be explained hereunder. The target turning center position **tXc** is calculated on the vehicle-fixed coordinate system herein. FIG.5 is a flowchart showing a routine for calculating the target turning center position **tXc** in the first embodiment.

In step 401, an absolute value of the steering angle $\delta$ of the steering wheel is compared with a predetermined value $\varepsilon$ (for example, 5 [deg]=0.0873 [rad]). According to this comparison, the target turning center position **tXc** is set as the X-coordinate **b** of the rear end of the vehicle (i.e., the target turning center position is set on a prolonged line of the rear end of the vehicle) in step 402 if the absolute value of the steering angle $\delta$ is larger than the predetermined value $\varepsilon$, otherwise the straight driving operation is selected (both the front wheel angle and the rear wheel angle are set to 0 [deg]) in step 403 if the absolute value of the steering angle $\delta$ is smaller than the predetermined value $\varepsilon$.

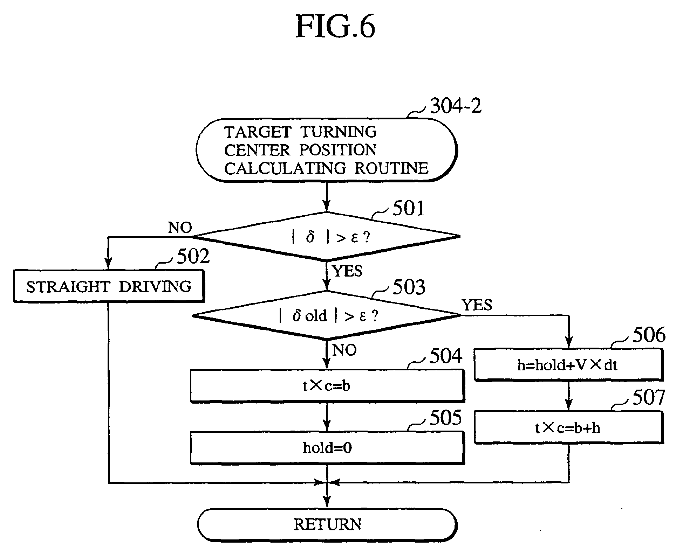

A flowchart in FIG.6 shows another example of the routine for calculating the target turning center position **tXc** in the first embodiment. In step 501, the absolute value of the steering angle $\delta$ of the steering wheel is compared with the predetermined value $\varepsilon$ (for example, 5 [deg]= 0.0873 [rad]). If the absolute value of the steering angle $\delta$ is smaller than the predetermined value $\varepsilon$, the straight driving operation is selected (both the front wheel angle and the rear wheel angle are set to 0 [deg]) in step 502. In contrast, if the absolute value of the steering angle $\delta$ is larger than the predetermined value $\varepsilon$, the absolute value of the preceding steering angle $\delta_{old}$ of the steering wheel is compared with the predetermined value $\varepsilon$ (for example, 5 [deg]=0.0873 [rad]) in step 503.

According to the comparison in step 503, if the absolute value of the preceding steering angle $\delta_{old}$ of the steering wheel is smaller than the predetermined value $\varepsilon$, the target turning center position **tXc** is set to the X coordinate **b** of the rear end of the vehicle in step 504, and then a preceding value $h_{old}$ of the moving distance of the vehicle is set to 0 in step 505. In contrast, if the absolute value of the preceding steering angle $\delta_{old}$ of the steering wheel is larger than the predetermined value $\varepsilon$ in step 503, the moving distance **h** of the vehicle is calculated in step 506. This calculation is carried out by adding a value that is obtained by multiplying the vehicle speed V by a calculation period **dt** to the preceding value $h_{old}$ of the moving distance **h** of the vehicle. Then, in step 507, the target turning center position **tXc** is calculated by adding the moving distance **h** of the vehicle to the X coordinate **b** of the rear end of the vehicle.

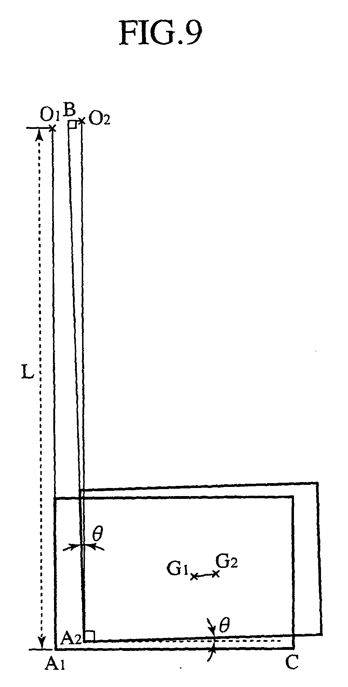

Here, as shown in FIG. 9, under the approximation that a difference between the X coordinate of the turning center and the X coordinate **b** of the rear end of the vehicle coincides with the moving distance of the center of gravity of the vehicle ($BO_2=G_1G_2$), the target turning center position can be calculated such that rear end points of right/left side surfaces of the vehicle move on tangents of right/left side surfaces of the vehicle in the initial stage of the turning ($A_1$, $A_2$,.... are put on a straight line $A_1C$). As a result, a road width necessary for the U-turn turning of the vehicle can be reduced. Also, if the final value of this target turning center position **tXc** is set to the X coordinate that is equivalent to a center between the front wheel axle and the rear wheel axle, both the side slip angle and the inside-outside wheel difference become almost 0.

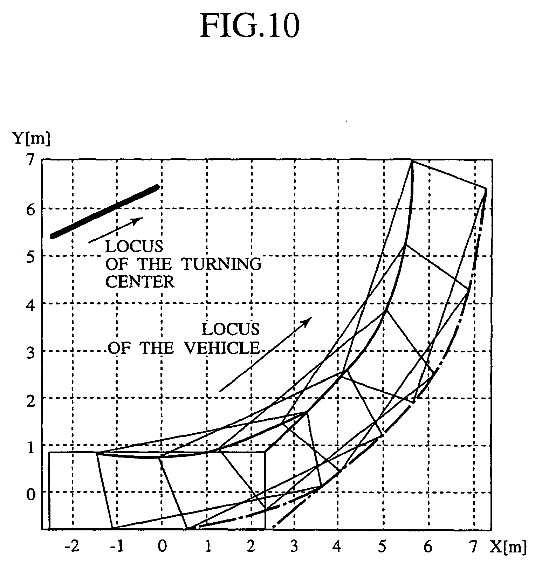

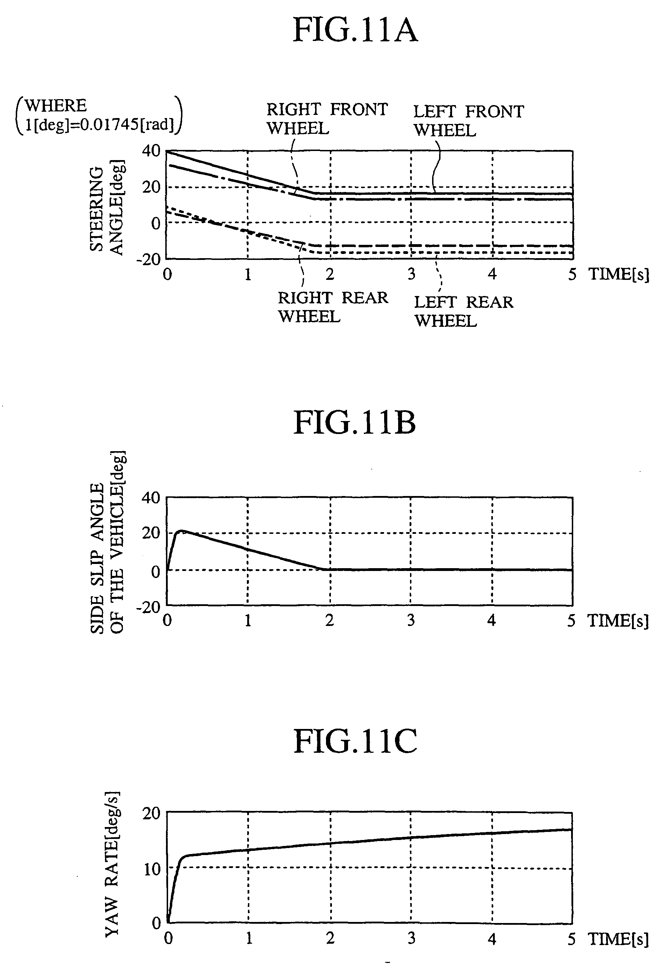

FIG.10 and FIGS.11A to 11C show simulation results of the turning of the vehicle if the first embodiment is applied. It can be understood that the protruding distance of the rear end of the vehicle in the right/left side surface directions can be eliminated and also the side slip angle of the vehicle becomes 0 in the latter half of the turning.

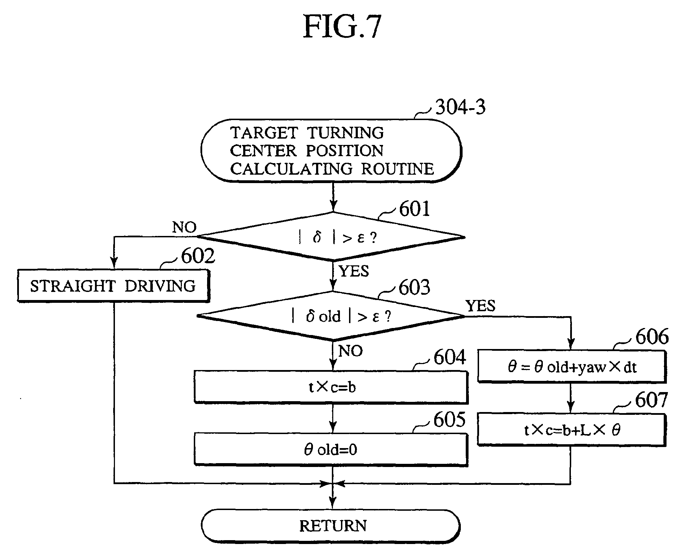

A flowchart in FIG.7 shows still another example of the routine for calculating the target turning center position **tXc** in the first embodiment. According to this routine for calculating the target turning center position, in step 601, the absolute value of the steering angle $\delta$ of the steering wheel is compared with the predetermined value $\varepsilon$ (for example, 5 [deg]=0.0873 [rad]). If the absolute value of the steering angle $\delta$ is smaller than the predetermined value $\varepsilon$, the straight

driving operation is selected (both the front wheel angle and the rear wheel angle are set to 0 [deg]) in step 602. In contrast, if the absolute value of the steering angle δ is larger than the predetermined value ε, the absolute value of the preceding steering angle $δ_{old}$ of the steering wheel is compared with the predetermined value ε (for example, 5 [deg] =0.0873 [rad]) in step 603.

If the absolute value of the preceding steering angle $δ_{old}$ of the steering wheel is smaller than the predetermined value ε in step 603, the target turning center position **tXc** is set to the X coordinate **b** of the rear end of the vehicle in step 604 and the preceding yaw angle $θ_{old}$ of the vehicle is set to 0 in step 605.

On the other hand, if the absolute value of the preceding steering angle $δ_{old}$ of the steering wheel is larger than the predetermined value E in step 603, the yaw angle θ of the vehicle is calculated in step 606. Here, a change amount of the yaw angle θ after the turning is started is calculated by adding a value, that is obtained by multiplying the yaw rate sensed by the yaw rate sensor 10 by the calculation period **dt,** to the preceding yaw angle $θ_{old}$. Then, the target turning center position **tXc** is calculated in step 607.

Here, as shown in FIG.9, under the approximation that a difference between the X coordinate of the turning center and the X coordinate **b** of the rear end of the vehicle coincides with a value obtained by multiplying a length L in FIG.9 by the yaw angle θ ($BO_2 = L \times θ$), the target turning center position can be calculated by adding $L \times θ$ to the X coordinate **b** of the rear end of the vehicle such that the rear end points of the right/left side surfaces of the vehicle move on the tangents of right/left side surfaces of the vehicle in the initial stage of the turning ($A_1, A_2, ....$ are put on the straight line $A_1C$). Accordingly, the road width required for the U-turn turning of the vehicle can be reduced. Also, if the final value of this target turning center position **tXc** is set to the X coordinate that is equivalent to the center between the front wheel axle and the rear wheel axle, both the side slip angle and the inside- outside wheel difference become almost 0.

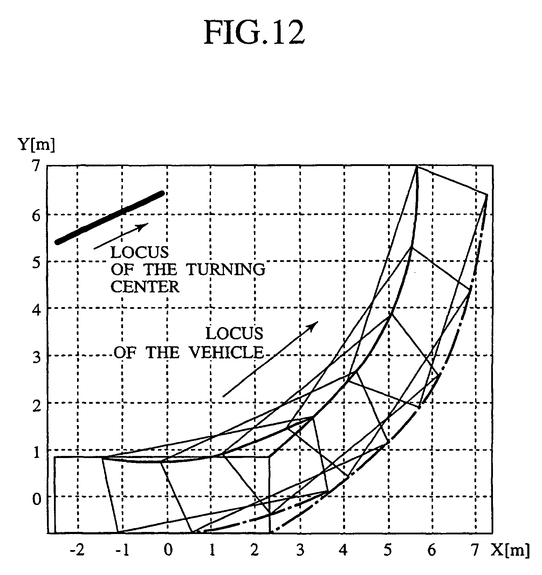

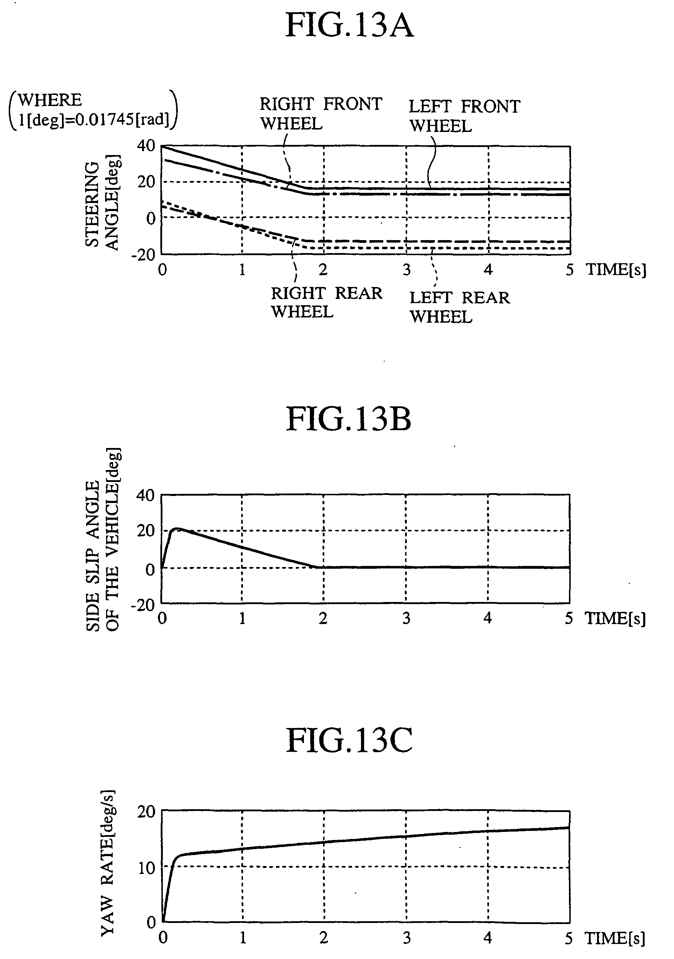

FIG.12 and FIGS.13A to 13C show simulation results of the turning of the vehicle if such controlling system is applied respectively. It can be understood that the protruding distance of the rear end of the vehicle in the right/left side surface directions can be eliminated and also the side slip angle of the vehicle becomes 0 in the latter half of the turning.

Then, the process for executing the calculation of the front/rear wheel angle command values in step 305 in FIG.4 will be explained hereunder. Here, a method of calculating the front/rear wheel angle command values based on geometric relationships between the front/rear wheel angles and the turning center position in the low speed range will be explained. In this case, since the side slip of the wheels occurs in the middle/high speed range, the above geometric relationships are not realized. Therefore, the front/rear wheel angle command values must be corrected based on the vehicle speed.

As shown in FIG.8, assume that the origin of the vehicle-fixed coordinate system is set as the center of gravity G of the vehicle and also the turning center of the vehicle-fixed coordinate system is set as (Xc, Yc). First, the Xc is given by

$$Xc = -Lr + \frac{-(Lf + Lr)}{\tan δf - \tan δr} \tan δr$$

$$\cdots \ (2)$$

In contrast, when the target turning center **tR** has the positive value, i.e., when the vehicle is leftward turning, the Yc is given by

$$Yc = \frac{Lf + Lr}{\tan δf - \tan δr} + Lt \quad (R \rangle 0)$$

$$\cdots \ (3)$$

While, when the target turning center **tR** has the negative value, i.e., when the vehicle is rightward turning, the Yc is given by

$$Yc = \frac{Lf + Lr}{\tan δf - \tan δr} - Lt \quad (R \langle 0)$$

$$\cdots \ (4)$$

On the contrary, the relationships between the target turning center tR and the coordinate values (Xc, Yc) are given by

$$Yc = \sqrt{tR^2 - Xc^2} \quad (R \rangle 0)$$

$$\cdots (5)$$

$$Yc = -\sqrt{tR^2 - Xc^2} \quad (R \langle 0)$$

$$\cdots (6)$$

From the above relationships, the front wheel angle command value δf and the rear wheel angle command value δr are calculated as

$$\delta f = \tan^{-1} \frac{-(Xc - Lf)}{\sqrt{R^2 - Xc^2} - Lt} \quad (R \rangle 0)$$

$$\cdots (7)$$

$$\delta r = \tan^{-1} \frac{-(Xc + Lr)}{\sqrt{R^2 - Xc^2} - Lt} \quad (R \rangle 0)$$

$$\cdots (8)$$

and also

$$\delta f = \tan^{-1} \frac{Xc - Lf}{\sqrt{R^2 - Xc^2} - Lt} \quad (R \langle 0)$$

$$\cdots (9)$$

$$\delta r = \tan^{-1} \frac{Xc + Lr}{\sqrt{R^2 - Xc^2} - Lt} \quad (R \langle 0)$$

$$\cdots (10)$$

Therefore, the command values of the front/rear wheel angles are calculated based on the target turning radius **tR** and the target turning center position **tXc,** by using Eqs. (7) to (10).

In this case, the data that are calculated previously based on the target turning radius **tR** and the target turning center position **tXc** may be stored as the map data without using the above calculating equation, and then the command values of the front/rear wheel angles may be calculated.

Also, the explanation has been made in the above under the assumption that the vehicle profile is a rectangle. However, if the vehicle profile has a profile different from the rectangle, the target turning center position may be calculated by executing the same process as the above while using the initial value of the target turning center position as the forward position with respect to the prolonged line of the rear end of the vehicle. Accordingly, while restricting the protruding distance of the rear end of the vehicle in the right/left side surface directions according to the profile of the vehicle, unnecessary protrusion prevention in design of the profile of the vehicle can be neglected.

The above first embodiment is aimed at implementing the turning radius in response to the steering angle operated by the driver, while suppressing the protrusion during the turning of the vehicle in the right/left side surface directions of the vehicle. In order to achieve this aim, there are utilized characteristics that, when the wheel turning center is being fixed on the vehicle-fixed coordinate system, the wheel-turning center radius can coincide with the turning radius of the vehicle and also the wheel-turning center elevation angle can coincide with the posture angle of the vehicle.

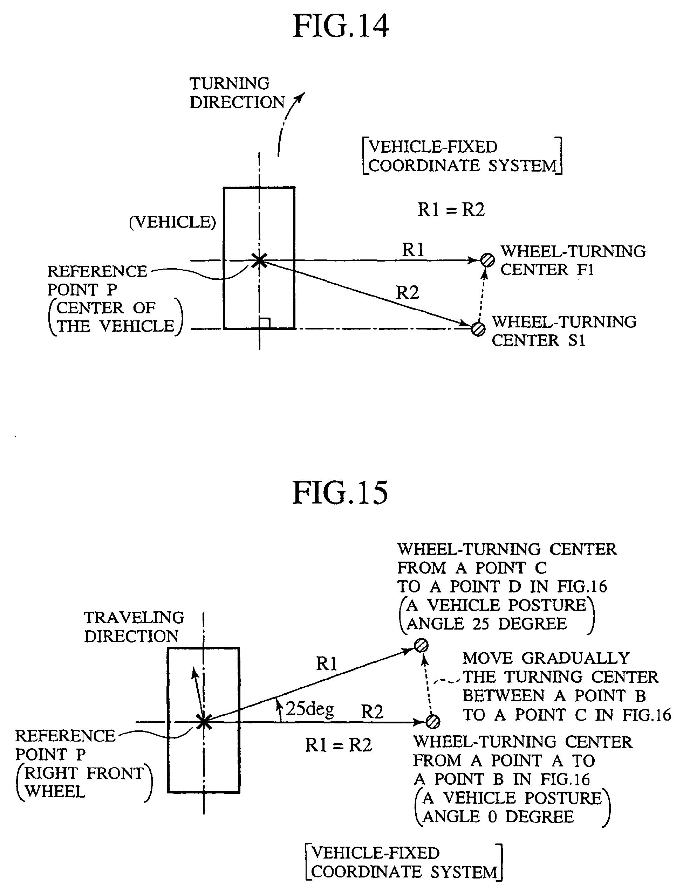

In other words, when the vehicle starts to move, the wheel-turning center is positioned on a prolonged line of the rear end of the vehicle (at a point S1 in FIG.14) to eliminate the protrusion of the vehicle (i.e., to reduce the posture angle of the rear end of the vehicle into less than 0 [deg]) After the collision of the protruded portion of the vehicle against the obstruction has been avoided, the wheel-turning center is positioned just beside the center of the vehicle (at a point F1 in FIG.14) to make the turning radius of the vehicle small. Between above two situations, the wheel-turning center is gradually shifted from the point S1 to the point F1 in FIG.14 in compliance with the running of the vehicle to smooth the behavior of the vehicle.

Accordingly, both the side slip angle and the inside-outside wheel difference during the turning of the vehicle can be reduced without causing the driver to feel the feeling of physical disorder.

Also, since the target turning center position is calculated based on the vehicle-fixed coordinate system, the calculation of the center-of-gravity position and the calculation of the yaw rate, both are required to calculate the target turning center position based on the ground coordinate system, are not needed. Therefore, an amount of calculation can be reduced.

However, in the first embodiment, there is the problem that, since the influence of the moving of the wheel-turning center on the turning radius of the vehicle is not taken account, the desired turning radius that is correlated with the wheel-turning angle operated by the driver cannot be achieved while the wheel-turning center is moved.

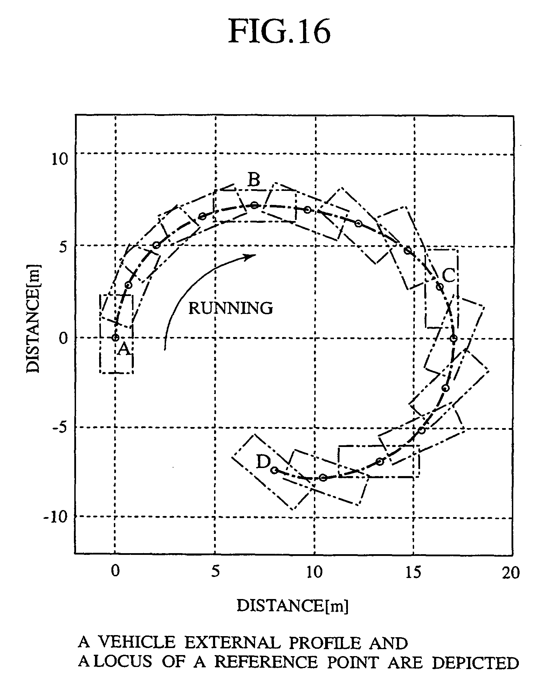

The simulation conditions to explain the problem are shown in FIG. 15, and the simulation result is shown in FIG.16. Here, the center of the vehicle is set as the reference point P on the vehicle. However, although the wheel-turning center radius is kept constant from the point B to the point C while the wheel-turning center is moved forward, the turning radius of the vehicle is increased larger prior to this interval.

In this manner, in the first embodiment, the posture angle of the vehicle cannot be changed while keeping the turning radius of the vehicle at the desired value. This respect can be improved in second and third embodiments described in the following.

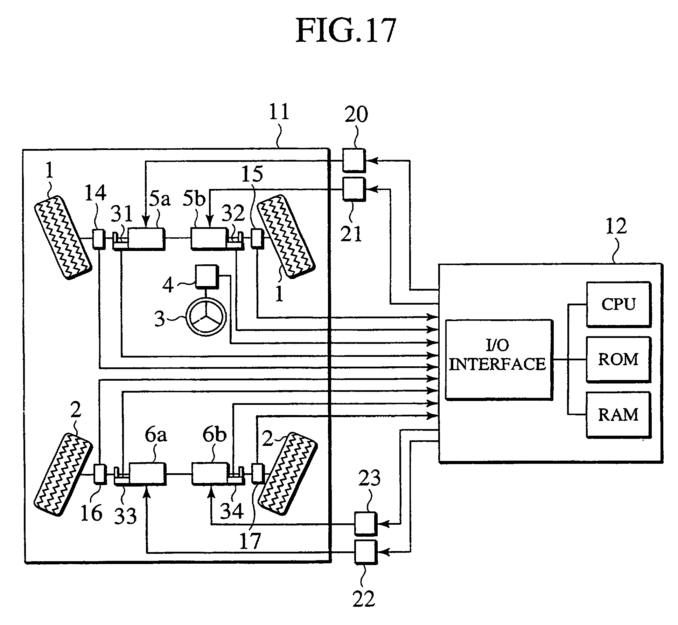

FIG.17 is a view showing a configuration of a vehicle drive controlling system to which a vehicle front/rear wheel angle controlling system according to a second embodiment of the present invention are applied.

In FIG.17, 1 is the front wheel, 2 is the rear wheel, 3 is the steering wheel operated by the driver, 4 is the steering angle sensor for sensing the steering angle of the steering wheel. For example, an optical encoder type sensor for sensing the rotated angle of the column shaft is employed as the steering angle sensor. Also, 5a and 5b are left/right front wheel turning actuators respectively, and 6a and 6b are left/right rear wheel turning actuators respectively. These actuators have a DC motor respectively and can adjust the wheel-turning angles of left/right front/rear wheels by changing a rotation motion of the motor into a lateral motion of the steering rack via worm gears to adjust an amount of movement of the steering rack. The motor is not limited to the DC motor, and the induction motor, a switched reluctance motor, or the like may be employed. In addition, a linear motor that can directly adjust an amount of movement of the steering rack may be employed.

Also, 20, 21, 22, 23 are a driving circuit for driving each wheel-turning DC motor, and these driving circuits are constructed to form the H bridge. The current feedback of the DC motors is executed to implement the motor current that is instructed by an ECU (12) described later. Also, 31, 32, 33, 34 are a potentiometer-type rack stroke sensor for sensing an amount of movement of each of the right/left front/rear steering racks, respectively. Also, 14, 15, 16, 17 are the speed sensor for sensing the rotation speed of each wheel of the vehicle 11, respectively. There are a hole IC type speed sensor that senses the rotation of the gear fitted to the axles of respective wheels and outputs a pulse upon sensing a boundary position between the groove and the gear tooth, etc.

Also, 12 is the front/rear wheel angle control unit constructed by the control circuit (ECU) using mainly the microcomputer, and executes the input/output of the information from/to the external device and various calculations. The CPU in this unit executes the calculation, the ROM stores a control program, various data, etc. (described later), the RAM stores temporarily the information during the execution of the program, and the I/O interface executes the input of the information from the external sensor, etc. and the output of the signal to drive the external actuator. Also, there are provided a timer for counting a pulse-to-pulse time of the speed sensor, etc.

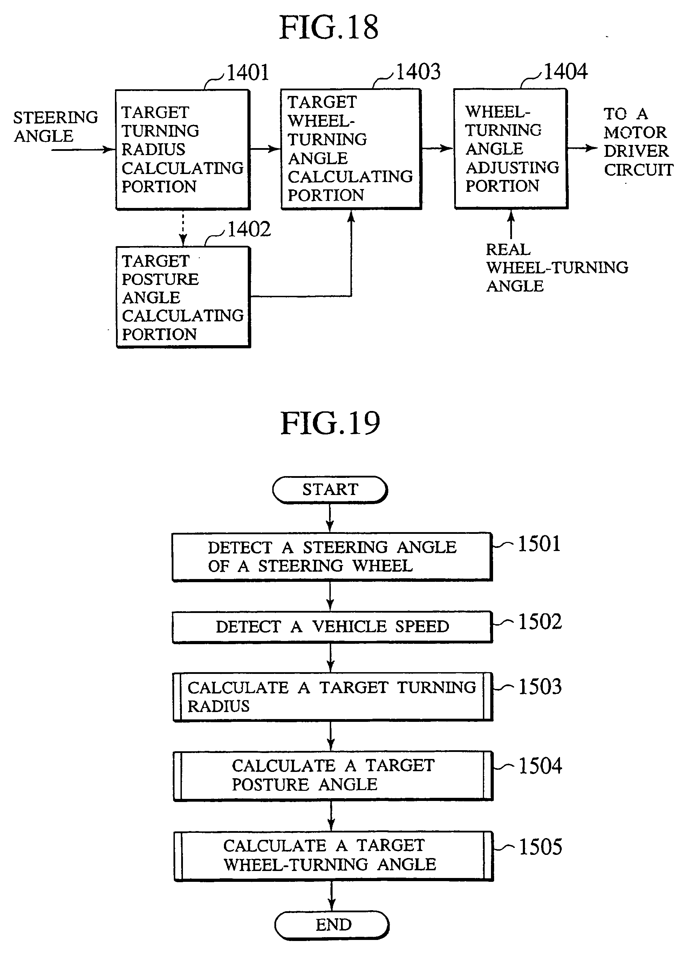

FIG.18 is a block diagram showing a configuration of a vehicle front/rear wheel angle controlling unit 12 in the second embodiment. This front/rear wheel angle controlling unit 12 comprises a target turning radius calculating portion 1401 for calculating the target turning radius based on the steering angle as an amount of steering operation, a target posture angle calculating portion 1402 for calculating the target posture angle of the reference point of the vehicle, a target wheel-turning angle calculating portion 1403 for calculating the target wheel- turning angle of the front/rear wheels based on the target turning radius and the target posture angle, and a wheel- turning angle adjusting portion 1404 for adjusting a real wheel-turning angle such that the real wheel-turning angle coincides with the target wheel-turning angle.

These constituent elements of the front/rear wheel angle controlling unit 12 can be accomplished in the ECU (12) in the order of 1401, 1402, 1403, and 1404. Even if the reference point P of the vehicle is set to any point on the vehicle, the same explanation can be applied similarly. Therefore, an application example in which the reference point P is set to the center of the vehicle (a middle point of a line that connects front/rear tread centers) will be explained hereinafter.

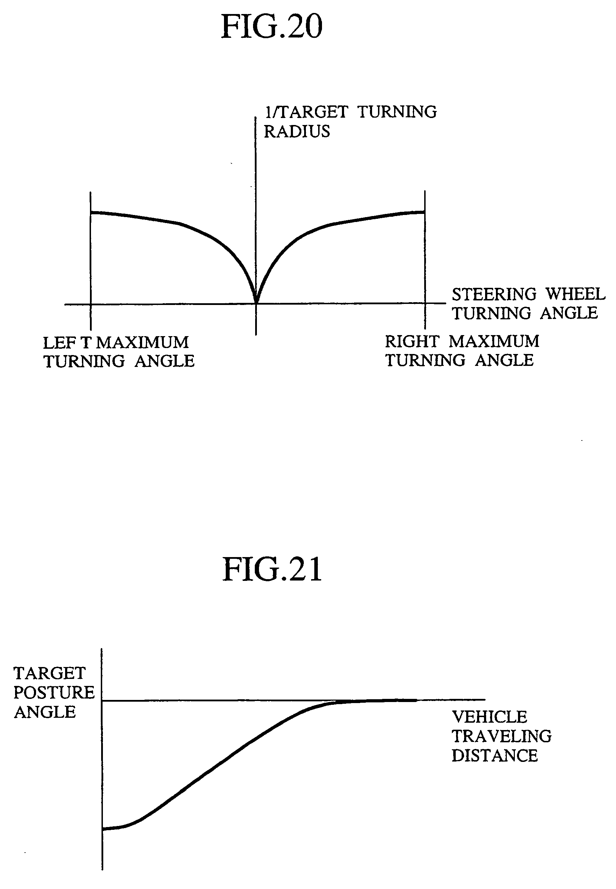

First, in the target turning radius calculating portion 1401, the target turning radius **Re** is calculated in response to a sensed value ST of the steering wheel turning angle. The target turning radii **Re** are storing previously in the ROM in the form of a table in connection with the turning angle of the steering wheel, as shown in FIG. 20, and then can be calculated by looking up the table. At this time, since the turning radius in the straight driving state of the vehicle corresponds to the infinity, it is convenient that table values are input as reciprocal values of the target turning radius, as shown in FIG.20. This calculation is carried out every 10 ms and also the target turning radius **Re** is output every 10 ms.

Then, in the target posture angle calculating portion 1402, the target posture angle $\beta$ is calculated according to the circumstance situation of the vehicle. In this example, if the center of the vehicle is set as the reference point P on the vehicle, the target posture angle $\beta$ is generated to approach "0" in such a way that the wheel turning center is shifted from the point S1 on the prolonged line of the rear end of the vehicle (FIG.14) to the point F1 according to the moving distance **z** of the reference point P from the vehicle stop state, as shown in FIG.21.

Here, in order to prevent the sudden change of the target posture angle, the target posture angle $\beta$ can be generated to change relative to the movement of the vehicle as shown in FIG.21. In calculating the moving distance **z** of the reference point P, the moving distance of each wheel is calculated previously. Such moving distance of each wheel can be calculated by dividing the vehicle moving distance per pulse by a pulse-to-pulse time of the speed sensor to calculate the moving speed of each wheel and then integrating the moving speed with respect to time.

Otherwise, the moving distance of each wheel may be calculated by integrating a value that is obtained by multiplying the pulse generation number of the speed sensor by the wheel moving distance per pulse. Now four speed sensors are provided in total to the wheels. Since the reference points P are set to the geometric center of these wheels, the average value of the moving distances calculated based on respective outputs of four speed sensors can be simply employed as the moving distance **z** of the reference point P.

In this case, in addition to the above calculations of the target turning radius **Re** and the target posture angle $\beta$, the target turning radius and the target posture angle may be calculated to enter automatically into the parking garage while sensing the peripheral obstruction situation, like the automatic parking system.

Then, in the target wheel-turning angle calculating portion 1403, the target wheel-turning center (point Q) is calculated to achieve the target turning radius **Re** and the target posture angle $\beta$, and then the target wheel-turning angles (left front wheel $\delta$ fl*, right front wheel $\delta$ fr*, left rear wheel $\delta$ rl*, right rear wheel $\delta$ rr*) of respective wheels are calculated to achieve the target wheel-turning center.

FIG. 19 is a schematic flowchart showing an operation of the vehicle front/rear wheel angle controlling system in the second embodiment. First, the steering angle of the steering wheel is detected (step 1501). Then, the vehicle speed is detected (step 1502). Then, the target turning radius is calculated based on the steering angle of the steering wheel (step 1503). Then, the target posture angle is calculated (step 1504). Finally, the target wheel-turning angle is calculated (step 1505).

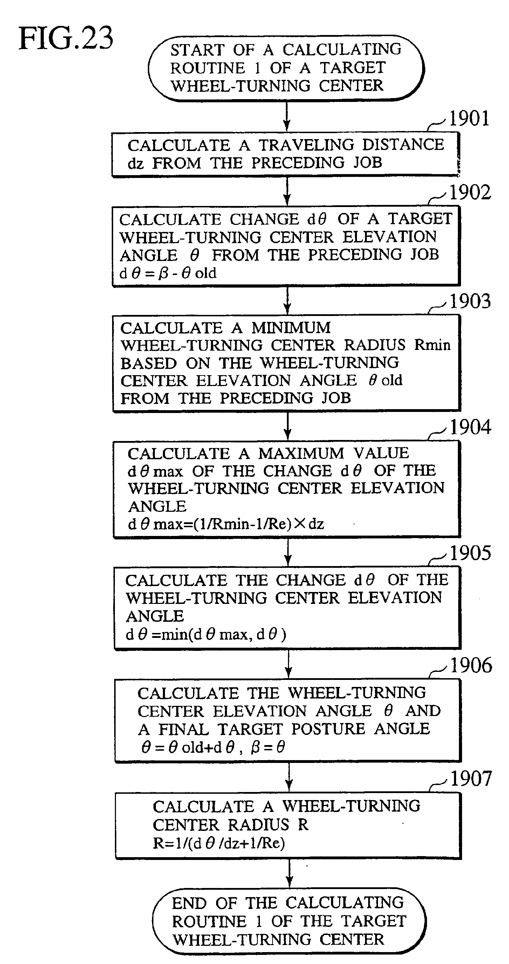

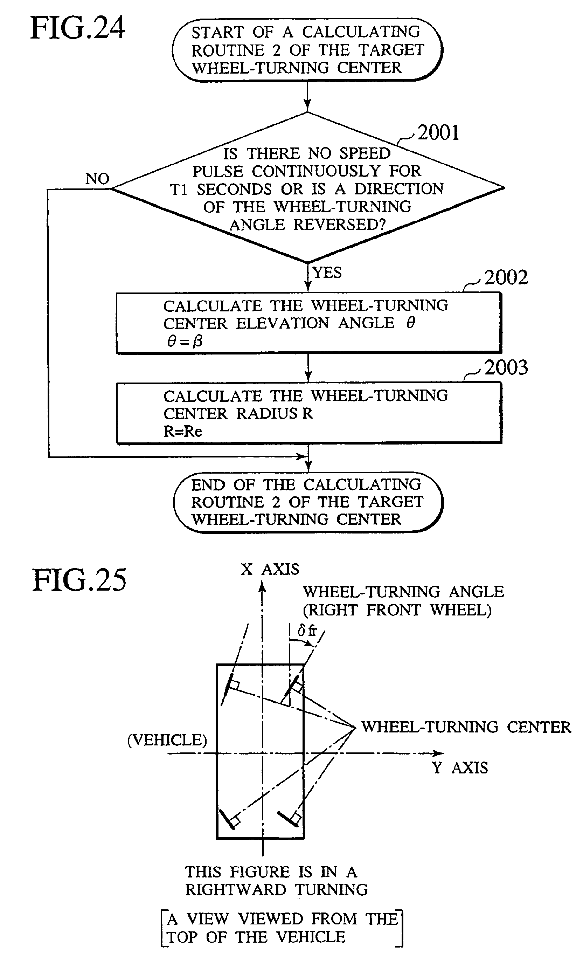

Then, examples of calculating the target wheel-turning center R and the wheel-turning center elevation angle $\theta$ to identify the target wheel-turning center (point Q) will be explained with reference to a flowchart 1 (FIG.23) and a flowchart 2 (FIG.24) hereunder. The flowchart 1 executes the calculation in synchronism with the pulse rise of the wheel speed sensor of the right front wheel when the vehicle is leftward turned and also executes the calculation in synchronism with the pulse rise of the wheel speed sensor of the left front wheel when the vehicle is rightward turned or also is traveling on a straight line.

Since the speed pulse is output every moving distance of the vehicle, it is made easy to calculate the target wheel-turning angle based on the change amount $\delta\beta$ of the target posture angle against the predetermined moving amount $\delta$**z** of the reference point of the vehicle. That is, if the target wheel-turning angle is calculated in synchronism with the time, it must be calculated after the moving distance is calculated for a predetermined time period. In contrast, since the present system is applied by setting the reference point P as the position of the speed sensor, the moving distance is previously known and thus such calculation is not needed. In addition, if the method of calculating the moving distance in synchronism with the time and then sensing the vehicle speed based on the number of pulses generated within the time is employed, the measuring accuracy of the moving distance becomes worse in the situation that the number of pulses is small. However, according to the present system, the calculation to make the best use of the resolution of the speed sensor to its maximum without these treatments.

In this flowchart 1, the calculation is carried out every 10 ms.

In the flowchart 1, the wheel-turning center is calculated under the condition that the vehicle is moving. In step 1901, a traveling distance **dz** of the vehicle during 1 JOB is calculated based on Eq.(11) from the traveling distance **z** of the reference point in the present JOB and the traveling distance $\mathbf{z}_{old}$ of the reference point in the preceding JOB.

$$\mathbf{dz} = \mathbf{z} - \mathbf{z}_{old} \qquad \qquad ...(11)$$

If the position of the right front wheel speed sensor is set as the reference point P when the vehicle is leftward turning and the position of the left front wheel speed sensor is set as the reference point P when the vehicle is rightward turning or is traveling on the substantially straight line, the value **dz** can correspond to a distance that is fixed previously according to the pulse generation interval. Therefore, there is no necessity to calculate the traveling distance **dz** based on Eq.(11).

In step 1902, change amount $d\theta$ of the target wheel-turning center elevation angle $\theta$ from the preceding JOB is calculated based on Eq.(12) from the target posture angle $\beta$ calculated by the target posture angle calculating means and the wheel-turning center elevation angle $\theta_{old}$ in step 1906 in the preceding JOB.

$$d\theta = \beta - \theta_{old} \qquad \qquad ...(12)$$

In this case, the available range of the wheel-turning center radius R is limited by the turning ability of the front/rear wheels (FIG.27). Therefore, if the wheel-turning center radius R is calculated based on Eq.(14) descried later, the unavailable wheel-turning center radius R is calculated according to magnitudes of the turning radius Re and $\delta\beta/\delta z$. As a result, such an drawback is caused that the turning radius cannot be achieved in compliance with a steering amount operated by the driver. Accordingly, in order to avoid such drawback, the magnitude of $\delta\theta/\delta z$ is limited in following steps 1903, 1904, and 1905 such that the wheel-turning center radius R can be derived within the available range.

In step 1903, the minimum value $R_{min}$ of the wheel-turning center radius that can be achieved at each time is calculated based on the wheel-turning center elevation angle $\theta_{old}$ at the time of the preceding JOB. This minimum value $R_{min}$ is a distance between the point V and the point P in FIG.27, and can be calculated by previously measuring experimentally the $R_{min}$ values as table data for the angles $\theta$, then storing the table in the ROM, and then looking up the table.

In step 1904, while taking account of the minimum value $R_{min}$ of the wheel-turning center radius, the maximum value $d\theta_{max}$ of the change $d\theta$ of the wheel-turning center elevation angle $\theta$ is calculated to achieve the target turning radius **Re.**

$$d\theta_{max} = (1/R_{min} - 1/Re) \times dz \qquad ...(13)$$

Then, in step 1905, the wheel-turning center elevation angle $\theta$ is restricted by this value. That is, the change $d\theta = \min(d\theta_{max}, d\theta)$ of the wheel-turning center elevation angle $\theta$ is calculated. In step 1906, the final target posture angle $\beta = \theta$ is calculated and also the wheel-turning center elevation angle $\theta = \theta_{old}+d\theta$ is calculated by using the change $d\theta$ of the wheel-turning center elevation angle.

Finally, in step 1907, the wheel-turning center radius R is calculated based on Eq.(14), and then this calculating routine 1 of the target wheel-turning center is ended.

$$R = 1/(d\theta/dz + 1/Re) \qquad \qquad ...(14)$$

Meanwhile, since the wheel-turning servo system of the front/rear wheels is the inertia-system position control, it is impossible to achieve immediately the desired stepwise target position. Thus, the vehicle moves continuously up to the target position to achieve the final target position. Accordingly, if the target position is discontinuously generated, such a drawback is caused that the vehicle turning center cannot be obtained at a desired position in the transient state to catch up the target value.

Therefore, the value $\delta\beta/\delta z$ is set not to change abruptly in Eq. (14). Then, 1/R is calculated as a value that is not changed abruptly. As a result, the target position is calculated as a value that is not changed abruptly, and thus the above-mentioned drawback can be avoided.

Also, step 1907 may be achieved as follows. That is, if the change of the target posture angle against the moving distance δ **z** of the reference point P is a positive value, the wheel-turning center radius R is correlated as a value that is smaller than the target turning radius Re. While, if the change of the target posture angle against the moving distance δ z of the reference point P is a negative value, the wheel-turning center radius R is correlated as a value that is larger than the target turning radius Re. These data are stored in the ROM, and the wheel-turning center radius R can be derived by looking up the data.

In the flowchart 2 (FIG.24), the wheel-turning center is calculated in the state that the vehicle is substantially stopped or when the turning direction of the vehicle is changed. In step 2001, it is decided whether or not the vehicle speed pulse is not continuously generated for a predetermined time (T1 seconds) or a direction of the wheel-turning angle is reversed. If no vehicle speed pulse is generated or the direction of the wheel-turning angle becomes to be reversed, the process goes to step 2002. Where T1 is set to the pulse generation interval at the time of the vehicle speed of 1 km/h. Further, in step 2001, if it is detected based on an amount of the steering operation operated by the driver that the turning center required for the vehicle is reversed from the right to the left or vice versa, the process goes to step 2002. If both conditions in step 2001 are not satisfied, this calculating routine 2 is ended.

In step 2002, the wheel-turning center elevation angle is directly set to the target posture angle β, i.e., θ = β. In step 2003, the wheel-turning center radius R is directly set to the target turning radius **Re,** i.e., R = Re. Then, this calculating routine 2 of the target wheel-turning center is ended.

According to the above routines, the driver can change discontinuously the motion of the vehicle (the turning radius and the posture angle) in the condition that the vehicle is stopped.

Then, an example in which the target wheel-turning angles (left front wheel δ fl*, right front wheel δ fr*, left rear wheel δ rl*, right rear wheel δ rr*) of respective wheels are calculated from the target wheel-turning center (point Q) will be explained hereunder. The relationships between the wheel-turning angles of respective wheels and the wheel-turning center are experimentally calculated previously when the wheel-turning angles (left front wheel δ fl, right front wheel δ fr, left rear wheel δ rl, right rear wheel δ rr) of respective wheels are changed in the available range respectively. At this time, the wheel- turning center can be decided uniquely for the wheel-turning angles of four wheels, nevertheless a combination of the wheel-turning angles of four wheels cannot be decided uniquely when the wheel-turning center is decided beforehand and the freedom of the combinations is present.

Therefore, among the margin of the combinations, the wheel-turning angles of respective wheels that are close to the combination obtained when the wheel-turning angles of respective wheels are decided such that, as shown in FIG.25, lines connecting respective wheels and the wheel-turning center can intersect orthogonally with the direction of respective wheels are correlated to the wheel-turning center.

However, if the wheel-turning center is sufficiently remote from the vehicle (the vehicle is traveling on the almost straight line), the combination by which the toe-in can be achieved to maintain sufficiently the straight line stability of the vehicle is selected, and then the wheel-turning angles of respective wheels are correlated to the wheel-turning center. According to such correlation, the running resistance can be reduced when the vehicle is traveling at the low speed, and thus the energy necessary for the running can be suppressed. Since the tire slip angle of respective wheels can also be reduced, the effect for suppressing the tire squeal noise can also be achieved.

In this manner, since the data in which the wheel-turning angles (left front wheel δ fl, right front wheel δ fr, left rear wheel δ rl, right rear wheel δ rr) of respective wheels are correlated to the available wheel-turning center respectively can be stored in the ROM and then the data can be looked up, the target wheel-turning angles (left front wheel δ fl*, right front wheel δ fr*, left rear wheel δ rl*, right rear wheel δ rr*) of respective wheels are calculated with respect to the target wheel- turning center point Q.

In this case, the wheel-turning center is changed according to not only the wheel-turning angles of respective wheels but also the vehicle speed. Therefore, preferably such influence may be previously detected experimentally and stored in the ROM as data, and then looked up in compliance with the vehicle speed.

In the wheel-turning angle adjusting portion 1404, current command values that are instructed for the motor driver circuits 20, 21, 22, 23 are calculated such that the wheel-turning angles (left front wheel δ fl, right front wheel δ fr, left rear wheel δrl, right rear wheel δ rr) of respective wheels can coincide with the target wheel- turning angles δ fl*, δ fr*, δ rl*, δ rr*. Here, sensed values of the wheel-turning angles of respective wheels can be calculated from detected values of the stroke sensors 31, 32, 33, 34 by detecting experimentally relationships between the sensed values of respective stroke sensor and the wheel-turning angles of respective wheels, then storing previously the correlated data in the ROM, and then looking up the data, and thus the wheel-turning angles of respective wheels can be obtained from the detected values of the stroke sensors 31, 32, 33, 34.

The current command values are feedback-calculated such that the detected values of the wheel-turning angles can coincide with the target wheel-turning angles at respective wheels. As the feedback calculating method, there are the PID control, the sliding mode control, the model-based control, etc. Since all controls are well known generally, their detailed explanation will be omitted herein.

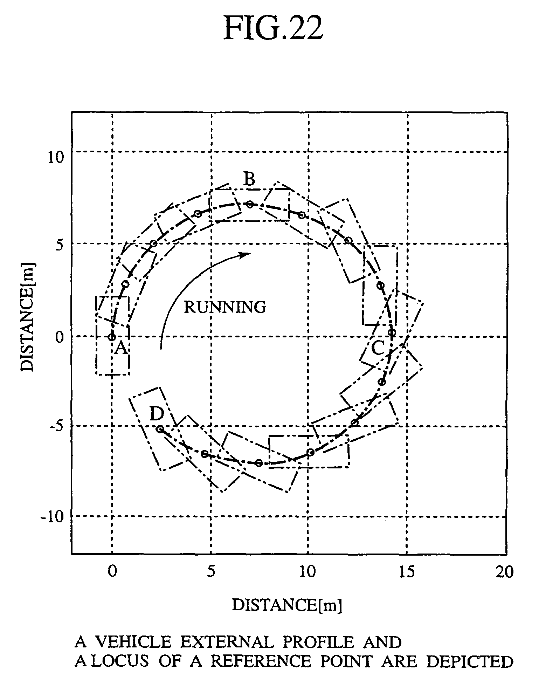

The simulation result obtained by the control system constructed in the second embodiment under the conditions given in FIG.15 is shown in FIG.22. To change the posture angle gradually while keeping constant the turning radius of the vehicle from the point B to the point C can be achieved.

In this case, the case of the vehicle having the mechanism that can control independently the wheel-turning angles of four wheels respectively is explained as above. The second embodiment can also be applied to the mechanism that cannot adjust independently the right/left wheel-turning angles in the front wheels or the rear wheels or the front/rear wheels.

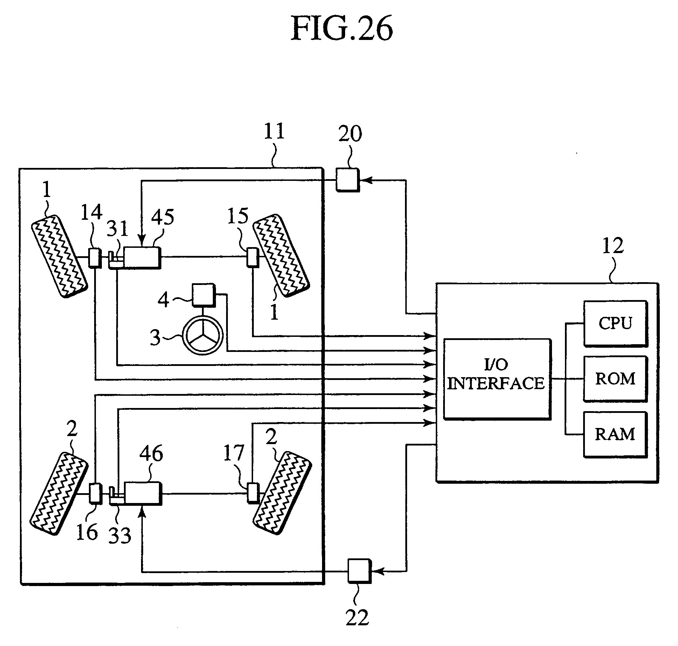

FIG.26 shows a configuration of a third embodiment in which the present invention is applied to the vehicle having the mechanism that cannot adjust independently the front/rear wheel-turning angles in the front/rear wheels.

In FIG.26, 45, 46 are an actuator for simultaneously adjusting the front/rear wheel-turning angles respectively. The actuator has the DC motor and can move the rack stroke laterally via the worm gear. If the present invention is applied to such mechanism, the target wheel-turning angle calculating means and the wheel-turning angle adjusting means may be modified as follows in the above second embodiment.

In the wheel-turning angle calculation, after the target wheel-turning center is calculated similarly as above, the front/rear stroke lengths to implement the wheel-turning center may be calculated (At this time, not the wheel-turning angle but the stroke length corresponding to the wheel-turning angle is employed as the target value, but no trouble is substantially caused). The target stroke lengths (front wheel STf*, rear wheel STr*) of the front/rear wheels can be calculated by previously measuring experimentally the stroke lengths of the front/rear wheels against the wheel-turning center, then storing the data in the ROM, and then looking up the data. As explained above, preferably the influence of the vehicle speed may be stored as the ROM data and then looked up in response to the vehicle speed.

Based on such configuration, in the wheel-turning angle adjusting means, the feedback control is carried out for respective wheels such that sensed values of the front/rear stroke sensors can coincide with the target stroke lengths (front wheel STf*, rear wheel STr*) of the front/rear wheels. As the feedback controlling method, there are the PID control, the sliding mode control, the model-based control, etc. Their detailed explanation will be omitted herein.

Similarly, the third embodiment can also be applied to the mechanism that cannot adjust independently the right/left wheel-turning angles in only the front wheels or the rear wheels. The third embodiment can also be applied to the mechanism in which the front wheels can be uniquely decided mechanically in response to the steering operation by the driver and only the rear wheels can be adjusted independently from the steering operation. In such case, the target wheel-turning angle calculating means and the wheel-turning angle adjusting means may be constructed according to the mechanism like the above-mentioned variation.

Also, the target posture angle may be previously stored in the memory as mapped data, and then the data may be employed.

With the above, the case where the vehicle is traveling forward is explained. If the vehicle is traveling backward, the present invention can be accomplished by setting the retreating direction as the positive direction of the X-axis. As for the discrimination of the forward running and the backward running of the vehicle, according to the vehicle having the automatic transmission by which the driver can select the forward/backward traveling commands, for example, it is decided that the vehicle is forward traveling while the forward traveling command is issued, whereas it is decided that the vehicle is backward traveling while the backward traveling command is issued.

It should be understood that only illustrative embodiments of the invention have been described and that many modifications and adaptations are possible, without departing from the scope of the invention as disclosed in the accompanying claims.

**Claims**

1. A vehicle front/rear wheel angle controlling system having a unit for controlling independently front/rear wheel angles respectively, the system comprising:

   a target turning radius calculating portion (201) for calculating a target turning radius based on an amount of steering operation;
   a target turning center position calculating portion (202) for calculating a target turning center position during turning of the vehicle; and
   a front/rear wheel angle command value calculating portion (203) for calculating command values of the front/rear wheel angles so as to achieve the target turning center position;

   **characterized in that** the target turning center position calculating portion (202) calculates the target turning center position based on the target turning radius as a position on a straight line, that intersects orthogonally with a longitudinal axis line of the vehicle and passes through the rear end of the vehicle, so as to restrict an amount of protrusion of a rear end portion in right/left side surface directions during the turning of the vehicle.

2. A vehicle front/rear wheel angle controlling system according to claim 1, wherein the target turning center position calculating portion (202) calculates the target turning center position as a position on the straight line that intersects orthogonally with the longitudinal axis line of a vehicle and passes through the rear end of the vehicle in an initial stage of the turning of the vehicle and as a position that moves gradually in the forward direction of the vehicle with progress of the turning.

3. A vehicle front/rear wheel angle controlling system according to claim 2, wherein the target turning center position calculating portion (202) calculates the target turning center position as a position on the straight line that intersects orthogonally with the longitudinal axis line of the vehicle and passes through the rear end of the vehicle in the initial stage of the turning of the vehicle and as a position that moves gradually onto a straight line that is in parallel with a front axle and a rear axle and has an equal distance from each axle with the progress of the turning.

4. A vehicle front/rear wheel angle controlling system according to claim 2, wherein the target turning center position calculating portion (202) calculates the target turning center position as a position on the straight line that intersects orthogonally with the longitudinal axis line of the vehicle and passes through the rear end of the vehicle in the initial stage of the turning of the vehicle and as a position that moves so as to coincide a locus of a right or left side rear end point of the vehicle with a right or left side tangent of the vehicle in the initial stage of the turning.

5. A vehicle front/rear wheel angle controlling system according to claim 2, wherein the target turning center position calculating portion (202) calculates the target turning center position as a position on the straight line that intersects orthogonally with the longitudinal axis line of the vehicle and passes through the rear end of the vehicle in the initial stage of the turning of the vehicle and as a position that moves gradually in the forward direction of the vehicle based on an amount of movement of the vehicle with progress of the turning.

6. A vehicle front/rear wheel angle controlling system according to claim 2, wherein the target turning center position calculating portion (202) calculates the target turning center position as a position on the straight line that intersects orthogonally with the longitudinal axis line of the vehicle and passes through the rear end of the vehicle in the initial stage of the turning of the vehicle and as a position that moves in the forward direction of the vehicle by a distance that is equal to an amount of movement of a center-of-gravity point of the vehicle with progress of the turning.

7. A vehicle front/rear wheel angle controlling system according to claim 2, wherein the target turning center position calculating portion (202) calculates the target turning center position as a position on the straight line that intersects orthogonally with the longitudinal axis line of the vehicle and passes through the rear end of the vehicle in the initial stage of the turning of the vehicle and as a position that moves in the forward direction of the vehicle within an amount of movement of a center-of- gravity point of the vehicle as an upper limit with progress of the turning.

8. A vehicle front/rear wheel angle controlling system according to claim 2, wherein the target turning center position calculating portion (202) calculates the target turning center position as a position on the straight line that intersects orthogonally with the longitudinal axis line of the vehicle and passes through the rear end of the vehicle in the initial stage of the turning of the vehicle and as a position that moves gradually in the forward direction of the vehicle based on a posture of the vehicle with progress of the turning.

9. A vehicle front/rear wheel angle controlling system according to claim 2, wherein the target turning center position calculating portion (202) calculates the target turning center position as a position on the straight line that intersects orthogonally with the longitudinal axis line of the vehicle and passes through the rear end of the vehicle in the initial stage of the turning of the vehicle and as a position that moves in the forward direction of the vehicle by a distance, that is obtained by multiplying a distance between the target turning center position in the initial stage of the turning and a right or left side rear end point of the vehicle by a change of a yaw angle of the vehicle, with progress of the turning.

10. A vehicle front/rear wheel angle controlling system according to claim 2, wherein the target turning center position calculating portion (202) calculates the target turning center position as a position on the straight line that intersects orthogonally with the longitudinal axis line of the vehicle and passes through the rear end of the vehicle in the initial stage of the turning of the vehicle and as a position that moves in the forward direction of the vehicle within a distance, that is obtained by multiplying a distance between the target turning center position in the initial stage of the turning and a right or left side rear end point of the vehicle by a change of a yaw angle of the vehicle, as an upper limit with progress of the turning.

11. A vehicle front/rear wheel angle controlling system according to claim 2, wherein the target turning center position calculating portion (202) sets the target turning center position at a position that is located forward rather than the straight line that intersects orthogonally with the longitudinal axis line of the vehicle and passes through the rear end of the vehicle, according to a profile near the rear end portion of the vehicle in the initial stage of the turning of the vehicle.

12. A vehicle front/rear wheel angle controlling system according to any preceding claim, wherein the target turning center position calculating portion (202) calculates the target turning center position based on a vehicle-fixed coordinate system.

13. A vehicle front/rear wheel angle controlling method using a unit for controlling independently front/rear wheel angles respectively, the method comprising:

calculating a target turning radius based on an amount of steering operation (step 303);
calculating a target turning center position during turning of the vehicle (step 304); and
calculating command values of the front/rear wheel angles so as to achieve the target turning center position (step 305);

**characterized in that** the target turning center position is calculated based on the target turning radius as a position on a straight line, that intersects orthogonally with a longitudinal axis line of the vehicle and passes through the rear end of the vehicle, so as to restrict an amount of protrusion of a rear end portion in right/left side surface directions during the turning of the vehicle.

14. A vehicle front/rear wheel angle controlling method according to claim 13, wherein the target turning center position is calculated as a position on the straight line, that intersects orthogonally with the longitudinal axis line of a vehicle and passes through the rear end of the vehicle, in an initial stage of a turning of the vehicle and as a position that moves gradually in the forward direction of the vehicle with progress of the turning.

15. A vehicle front/rear wheel angle controlling system having a unit for controlling independently a wheel-turning angle of front wheels and a wheel-turning angle of rear wheels respectively, the system comprising:

a target turning radius calculating portion (1401) for calculating a target turning radius (Re) of a reference point (P) on a vehicle based on an amount of steering operation;
a target posture angle calculating portion (1402) for calculating a target posture angle ($\beta$) of the reference point (P); and
a target wheel-turning angle calculating portion (1403) for calculating target wheel-turning angles of front/rear wheels based on the target turning radius (Re) and the target posture angle ($\beta$);

**characterized in that** the target wheel-turning angle calculating portion (1403) calculates the target wheel-turning angles of the front/rear wheels by correcting the target wheel-turning angles to cause a wheel-turning center point (Q) to come up to the vehicle with respect to the target wheel-turning angles of the front/rear wheels obtained when the target posture angle is fixed constant while the target posture angle ($\beta$) is increased, and by correcting the target wheel-turning angles to cause the wheel-turning center point (Q) to go away from the vehicle with respect to the target wheel-turning angles of the front/rear wheels obtained when the target posture angle is fixed constant while the target posture angle ($\beta$) is decreased.

16. A vehicle front/rear wheel angle controlling system according to claim 15, wherein the target wheel-turning angle calculating portion (1403) calculates the target wheel-turning angle such that a wheel-turning center radius (R) is substantially obtained by $1/R = 1/Re + \delta \beta / \delta z$ according to the target turning radius (Re) and a change ($\delta \beta / \delta z$) of the target posture angle ($\beta$) relative to a moving distance ($\delta z$) of the reference point (P) of the vehicle and that a point (Q) at which a wheel-turning center elevation angle ($\theta$) is substantially equal to the target posture angle ($\beta$) is set as a wheel-turning center point.

17. A vehicle front/rear wheel angle controlling system according to claim 15, wherein the target wheel-turning angle calculating portion (1403) calculates the target posture angle not to abruptly change a change ($\delta \beta / \delta z$) of the target posture angle ($\beta$) relative to a moving distance ($\delta z$) of the reference point (P).

18. A vehicle front/rear wheel angle controlling system according to claim 15, further comprising at least one speed sensor for outputting a pulse every time when a certain point on the vehicle moves by a predetermined distance, and wherein the target wheel-turning angle calculating portion (1403) executes a calculation in synchronism with the pulse of the speed sensor.

19. A vehicle front/rear wheel angle controlling system according to claim 15, further comprising a vehicle speed sensing portion for sensing a moving speed of the vehicle, and
wherein the target wheel-turning angle calculating portion (1403) calculates the target wheel-turning angle at a point (Q), at which a wheel-turning center radius (R) coincides with the target turning radius (Re) and a wheel-turning center elevation angle ($\theta$) is equal to the target posture angle ($\beta$), irrespective of a change direction and a change rate of the target posture angle in a state that it can be considered that the vehicle is almost stopped.

20. A vehicle front/rear wheel angle controlling system according to claim 15, wherein the target wheel- turning angle calculating portion (1403) calculates the target wheel-turning angle to restrict an upper limit of a change ($\delta \theta / \delta z$) of a wheel-turning center elevation angle ($\theta$) relative to a moving distance ($\delta z$) of the reference point (P) according to the target posture angle ($\beta$) and the target turning radius (Re).

21. A vehicle front/rear wheel angle controlling method for controlling independently a wheel-turning angle of front wheels and a wheel-turning angle of rear wheels respectively, comprising:

   calculating a target turning radius (Re) of a reference point (P) on a vehicle based on an amount of steering operation (step 1503);
   calculating a target posture angle ($\beta$) of the reference point (P) (step 1504); and
   calculating target wheel-turning angles of front/rear wheels based on the target turning radius (Re) and the target posture angle ($\beta$) (step 1505);

   **characterized by** calculating the target wheel-turning angles of the front/rear wheels by correcting the target wheel-turning angles to cause a wheel-turning center point (Q) to come up to the vehicle with respect to the target wheel-turning angles of the front/rear wheels obtained when the target posture angle is fixed constant while the target posture angle ($\beta$) is increased, and by correcting the target wheel-turning angles to cause the wheel-turning center point (Q) to go away from the vehicle with respect to the target wheel-turning angles of the front/rear wheels obtained when the target posture angle is fixed constant while the target posture angle ($\beta$) is decreased (step 1505).

## Patentansprüche

1. Fahrzeug-Vorderrad/Hinterrad-Lenkwinkelsteuerungssystem mit einer Einheit zur unabhängigen Steuerung von Vorderrad- bzw. Hinterrad-Lenkwinkeln, wobei das System aufweist:

   einen Zielwenderadius-Berechnungsabschnitt (201) zum Berechnen eines Zielwenderadius auf der Basis eines Betrags eines Lenkvorgangs;
   einen Zielwendemittelpunktpositions-Berechnungsabschnitt (202) zum Berechnen einer Zielwendemittelpunktposition beim Wenden bzw. Abbiegen des Fahrzeugs; und
   einen Vorderrad/Hinterrad-Lenkwinkelsollwert-Berechnungsabschnitt (203) zum Berechnen von Sollwerten der Vorderrad/Hinterrad-Lenkwinkel zum Erreichen der Zielwendemittelpunktposition;

   **dadurch gekennzeichnet, daß** der Zielwendemittelpunktpositions-Berechnungsabschnitt (202) die Zielwendemittelpunktposition auf der Basis des Zielwenderadius als eine Position auf einer Geraden berechnet, die eine Längsachse des Fahrzeugs senkrecht schneidet und durch das Heck des Fahrzeugs geht, um einen Überstandsbetrag eines Heckabschnitts in Richtung der rechten/linken Seitenfläche beim Wenden bzw. Abbiegen des Fahrzeugs zu beschränken.

2. Fahrzeug-Vorderrad/Hinterrad-Lenkwinkelsteuerungssystem nach Anspruch 1, wobei der Zielwendemittelpunktpositions-Berechnungsabschnitt (202) in einem Anfangsstadium des Wendens bzw. Abbiegens des Fahrzeugs die Zielwendemittelpunktposition als Position auf der Geraden, welche die Längsachse eines Fahrzeugs senkrecht schneidet und durch das Heck des Fahrzeugs geht, und mit fortschreitendem Wendevorgang als eine Position berechnet, die sich allmählich in Vorwärtsrichtung des Fahrzeugs verschiebt.

3. Fahrzeug-Vorderrad/Hinterrad-Lenkwinkelsteuerungssystem nach Anspruch 2, wobei der Zielwendemittelpunktpositions-Berechnungsabschnitt (202) im Anfangsstadium des Wendens bzw. Abbiegens des Fahrzeugs die Zielwendemittelpunktposition als Position auf der Geraden, welche die Längsachse des Fahrzeugs senkrecht schneidet und durch das Heck des Fahrzeugs geht, und mit fortschreitendem Wendevorgang als eine Position berechnet, die sich allmählich zu einer Geraden hin verschiebt, die parallel zu einer Vorderachse und einer Hinterachse ist und einen gleichen Abstand zu jeder Achse aufweist.

4. Fahrzeug-Vorderrad/Hinterrad-Lenkwinkelsteuerungssystem nach Anspruch 2, wobei der Zielwendemittelpunktpositions-Berechnungsabschnitt (202) im Anfangsstadium des Wendens bzw. Abbiegens des Fahrzeugs die Zielwendemittelpunktposition als Position auf der Geraden, welche die Längsachse des Fahrzeugs senkrecht schneidet und durch das Heck des Fahrzeugs geht, und als eine Position berechnet, die sich so verschiebt, daß der geometrische Ort eines links- oder rechtsseitigen Heckpunkts des Fahrzeugs im Anfangsstadium des Wendevorgangs mit einer links- oder rechtsseitigen Tangente an das Fahrzeug zusammenfällt.

5. Fahrzeug-Vorderrad/Hinterrad-Lenkwinkelsteuerungssystem nach Anspruch 2, wobei der Zielwendemittelpunktpositions-Berechnungsabschnitt (202) im Anfangsstadium des Wendens bzw. Abbiegens des Fahrzeugs die Zielwendemittelpunktposition als Position auf der Geraden, welche die Längsachse des Fahrzeugs senkrecht schneidet und durch das Heck des Fahrzeugs geht, und mit fortschreitendem Wendevorgang als eine Position berechnet, die sich auf der Basis eines Verschiebungsbetrags des Fahrzeugs allmählich in Vorwärtsrichtung des Fahrzeugs verschiebt.

6. Fahrzeug-Vorderrad/Hinterrad-Lenkwinkelsteuerungssystem nach Anspruch 2, wobei der Zielwendemittelpunktpositions-Berechnungsabschnitt (202) im Anfangsstadium des Wendens bzw. Abbiegens des Fahrzeugs die Zielwendemittelpunktposition als Position auf der Geraden, welche die Längsachse des Fahrzeugs senkrecht schneidet und durch das Heck des Fahrzeugs geht, und mit fortschreitendem Wendevorgang als eine Position berechnet, die sich in Vorwärtsrichtung des Fahrzeugs um eine Distanz verschiebt, die gleich einem Schwerpunktverschiebungsbetrag des Fahrzeugs ist.

7. Fahrzeug-Vorderrad/Hinterrad-Lenlcwinkelsteuerungssystem nach Anspruch 2, wobei der Zielwendemittelpunktpositions-Berechnungsabschnitt (202) im Anfangsstadium des Wendens bzw. Abbiegens des Fahrzeugs die Zielwendemittelpunktposition als Position auf der Geraden, welche die Längsachse des Fahrzeugs senkrecht schneidet und durch das Heck des Fahrzeugs geht, und mit fortschreitendem Wendevorgang als eine Position berechnet, die sich innerhalb eines Schwerpunktverschiebungsbetrags des Fahrzeugs als Obergrenze in Vorwärtsrichtung des Fahrzeugs verschiebt.

8. Fahrzeug-Vorderrad/Hinterrad-Lenkwinkelsteuerungssystem nach Anspruch 2, wobei der Zielwendemittelpunktpositions-Berechnungsabschnitt (202) im Anfangsstadium des Wendens bzw. Abbiegens des Fahrzeugs die Zielwendemittelpunktposition als Position auf der Geraden, welche die Längsachse des Fahrzeugs senkrecht schneidet und durch das Heck des Fahrzeugs geht, und mit fortschreitendem Wendevorgang als eine Position berechnet, die sich auf der Basis einer Position des Fahrzeugs allmählich in Vorwärtsrichtung des Fahrzeugs verschiebt.

9. Fahrzeug-Vorderrad/Hinterrad-Lenkwinkelsteuerungssystem nach Anspruch 2, wobei der Zielwendemittelpunktpositions-Berechnungsabschnitt (202) im Anfangsstadium des Wendens bzw. Abbiegens des Fahrzeugs die Zielwendemittelpunktposition als Position auf der Geraden, welche die Längsachse des Fahrzeugs senkrecht schneidet und durch das Heck des Fahrzeugs geht, und mit fortschreitendem Wendevorgang als eine Position berechnet, die sich in Vorwärtsrichtung des Fahrzeugs um eine Distanz verschiebt, die durch Multiplikation einer Distanz zwischen der Zielwendemittelpunktposition im Anfangsstadium des Wendevorgangs und einem rechts- oder linksseitigen Heckpunkt des Fahrzeugs mit einer Gierwinkeländerung des Fahrzeugs ermittelt wird.

10. Fahrzeug-Vorderrad/Hinterrad-Lenkwinkelsteuerungssystem nach Anspruch 2, wobei der Zielwendemittelpunktpositions-Berechnungsabschnitt (202) im Anfangsstadium des Wendens bzw. Abbiegens des Fahrzeugs die Zielwendemittelpunktposition als Position auf der Geraden, welche die Längsachse des Fahrzeugs senkrecht schneidet und durch das Heck des Fahrzeugs geht, und mit fortschreitendem Wendevorgang als eine Position berechnet, die sich in Vorwärtsrichtung des Fahrzeugs innerhalb einer Distanz verschiebt, die durch Multiplikation einer Distanz zwischen der Zielwendemittelpunktposition im Anfangsstadium des Wendevorgangs und einem rechts- oder linksseitigen Heckpunkt des Fahrzeugs mit einer Gierwinkeländerung des Fahrzeugs als Obergrenze ermittelt wird.

11. Fahrzeug-Vorderrad/Hinterrad-Lenkwinkelsteuerungssystem nach Anspruch 2, wobei der Zielwendemittelpunktpositions-Berechnungsabschnitt (202) im Anfangsstadium des Wendevorgangs des Fahrzeugs gemäß einem Profil nahe dem Heckteil des Fahrzeugs die Zielwendemittelpunktposition in einer Position festsetzt, die eher vor der Geraden liegt, welche die Längsachse des Fahrzeugs senkrecht schneidet und durch das Heck des Fahrzeugs geht.

12. Fahrzeug-Vorderrad/Hinterrad-Lenkwinkelsteuerungssystem nach einem der vorstehenden Ansprüche, wobei der Zielwendemittelpunktpositions-Berechnungsabschnitt (202) die Zielwendemittelpunktposition auf der Basis eines fahrzeugfixierten Koordinatensystems berechnet.

13. Fahrzeug-Vorderrad/Hinterrad-Lenkwinkelsteuerungsverfahren mit Verwendung einer Einheit zur unabhängigen Steuerung der Vorderrad- bzw. Hinterrad-Lenkwinkel, wobei das Verfahren aufweist:

Berechnen eines Zielwenderadius auf der Basis eines Lenkungsbetrags (Schritt 303);
Berechnen einer Zielwendemittelpunktposition beim Wenden bzw. Abbiegen des Fahrzeugs (Schritt 304); und
Berechnen von Sollwerten der Vorderrad/Hinterrad-Lenkwinkel zum Erreichen der Zielwendemittelpunktposition (Schritt 305);

dadurch gekennzeichnet, daß die Zielwendemittelpunktposition auf der Basis des Zielwenderadius als Position auf einer Geraden berechnet wird, die eine Längsachse des Fahrzeugs senkrecht schneidet und durch das Heck des Fahrzeugs geht, um einen Überstandsbetrag eines Heckabschnitts in Richtung der rechten/linken Seitenfläche beim Wenden bzw. Abbiegen des Fahrzeugs zu beschränken.

14. Fahrzeug-Vorderrad/Hinterrad-Lenkwinkelsteuerungsverfahren nach Anspruch 13, wobei die Zielwendemittelpunktposition in einem Anfangsstadium des Wendevorgangs des Fahrzeugs als Position auf der Geraden, welche die Längsachse eines Fahrzeugs senkrecht schneidet und durch das Heck des Fahrzeugs geht, und mit fortschreitendem Wendevorgang als eine Position berechnet wird, die sich allmählich in Vorwärtsrichtung des Fahrzeugs verschiebt.

15. Fahrzeug-Vorderrad/Hinterrad-Lenkwinkelsteuerungssystem mit einer Einheit zur unabhängigen Steuerung eines Vorderrad-Lenkwinkels bzw. eines HinterradLenkwinkels, wobei das System aufweist:

einen Zielwenderadius-Berechnungsabschnitt (1401) zum Berechnen eines Zielwenderadius (Re) eines Bezugspunkts (P) an einem Fahrzeug auf der Basis eines Betrags eines Lenkvorgangs;
einen Zielpositionswinkel-Berechnungsabschnitt (1402) zum Berechnen eines Zielpositionswinkels ($\beta$) des Bezugspunkts (P); und
einen Zielradlenkwinkel-Berechnungsabschnitt (1403) zum Berechnen von Zielradlenkwinkeln von Vorder-/ Hinterrädern auf der Basis des Zielwenderadius (Re) und des Zielpositionswinkels ($\beta$);

dadurch gekennzeichnet, daß der Zielradlenkwinkel-Berechnungsabschnitt (1403) die Zielradlenkwinkel der Vorder-/Hiriterräder berechnet, indem die Zielradlenkwinkel so korrigiert werden, daß sich ein Radwendemittelpunkt (Q) bezüglich der bei konstant gehaltenem Zielpositionswinkel ermittelten Zielradlenkwinkel der Vorder-/Hinterräder dem Fahrzeug annähert, während der Zielpositionswinkel ($\beta$) erhöht wird, und indem die Zielradlenkwinkel so korrigiert werden, daß sich der Zielwendemittelpunkt (Q) bezüglich der bei konstant gehaltenem Zielpositionswinkel ermittelten Zielradlenkwinkel der Vorder-/Hinterräder vom Fahrzeug entfernt, während der Zielpositionswinkel ($\beta$) vermindert wird.

16. Fahrzeug-Vorderrad/Hinterrad-Lenkwinkelsteuerungssystem nach Anspruch 15, wobei der Zielradlenkwinkel-Berechnungsabschnitt (1403) den Zielradlenkwinkel so berechnet, daß man einen Radwendemittelpunktsradius (R) im wesentlichen durch $1/R = 1/Re + \delta\beta / \delta z$ aus dem Zielwenderadius (Re) und einer Änderung ($\delta\beta / \delta z$) des Zielpositionswinkels ($\beta$) bezüglich einer Verschiebungsdistanz ($\delta z$) des Bezugspunkts (P) des Fahrzeugs erhält, und daß ein Punkt (Q), in dem ein Radwendemittelpunkt-Höhenwinkel ($\theta$) im wesentlichen gleich dem Zielpositionswinkel ($\beta$) ist, als Radwendemittelpunkt festgesetzt wird.

17. Fahrzeug-Vorderrad/Hinterrad-Lenkwinkelsteuerungssystem nach Anspruch 15, wobei der Zielradlenkwinkel-Berechnungsabschnitt (1403) den Zielpositionswinkel so berechnet, daß eine Änderung ($\delta\beta / \delta z$) des Zielpositionswinkels ($\beta$) bezüglich einer Verschiebungsdistanz ($\delta z$) des Bezugspunkts (P) nicht plötzlich verändert wird.

18. Fahrzeug-Vorderrad/Hinterrad-Lenkwinkelsteuerungssystem nach Anspruch 15, das ferner mindestens einen Geschwindigkeitssensor aufweist, um jedesmal, wenn sich ein bestimmter Punkt des Fahrzeugs um eine vorgegebene Distanz bewegt, einen Impuls auszugeben, und

wobei der Zielradlenkwinkel-Berechnungsabschnitt (1403) eine Berechnung synchron mit dem Impuls des Geschwindigkeitssensors durchführt.

**19.** Fahrzeug-Vorderrad/Hinterrad-Lenkwinkelsteuerungssystem nach Anspruch 15, das ferner einen Fahrzeuggeschwindigkeitsmeßabschnitt zur Messung einer Bewegungsgeschwindigkeit des Fahrzeugs aufweist, und wobei der Zielradlenkwinkel-Berechnungsabschnitt (1403) den Zielradlenkwinkel in einem Punkt (Q) berechnet, in dem unabhängig von einer Änderungsrichtung und einer Änderungsgeschwindigkeit des Zielpositionswinkels in einem Zustand, in dem das Fahrzeug als nahezu stehend angesehen werden kann, ein Radwendemittelpunktradius (R) mit dem Zielwenderadius (Re) übereinstimmt und ein Radwendemittelpunkt-Höhenwinkel ($\theta$) gleich dem Zielpositionswinkel ($\beta$) ist.

**20.** Fahrzeug-Vorderrad/Hinterrad-Lenkwinkelsteuerungssystem nach Anspruch 15, wobei der Zielradlenkwinkel-Berechnungsabschnitt (1403) den Zielradlenkwinkel so berechnet, daß ein oberer Grenzwert einer Änderung ($\delta \theta / \delta z$) eines Radwendemittelpunkt-Höhenwinkels ($\theta$) bezüglich einer Verschiebungsdistanz ($\delta z$) des Bezugspunkts (P) entsprechend dem Zielpositionswinkel ($\beta$) und dem Zielwenderadius (Re) beschränkt wird.

**21.** Fahrzeug-Vorderrad/Hinterrad-Lenkwinkelsteuerungsverfahren zur unabhängigen Steuerung eines Radlenkwinkels von Vorderrädern bzw. eines Radlenkwinkels von Hinterrädern, wobei das Verfahren aufweist:

Berechnen eines Zielwenderadius (Re) eines Bezugspunkts (P) an einem Fahrzeug auf der Basis eines Lenkungsbetrags (Schritt 1503);
Berechnen eines Zielpositionswinkels ($\beta$) des Bezugspunkts (P) (Schritt 1504); und
Berechnen von Zielradlenkwinkeln der Vorder-/Hinterräder auf der Basis des Zielwenderadius (Re) und des Zielpositionswinkels ($\beta$) (Schritt 1505);

**gekennzeichnet durch** die Berechnung der Zielradlenkwinkel der Vorder-/Hinterräder, indem die Zielradlenkwinkel so korrigiert werden, daß sich ein Radwendemittelpunkt (Q) bezüglich der bei konstant gehaltenem Zielpositionswinkel ermittelten Zielradlenkwinkel der Vorder-/Hinterräder dem Fahrzeug annähert, während der Zielpositionswinkel ($\beta$) erhöht wird, und indem die Zielradlenkwinkel so korrigiert werden, daß sich der Zielwendemittelpunkt (Q) bezüglich der bei konstant gehaltenem Zielpositionswinkel ermittelten Zielradlenkwinkel der Vorder-/Hinterräder vom Fahrzeug entfernt, während der Zielpositionswinkel ($\beta$) vermindert wird (Schritt 1505).

## Revendications

**1.** Système de commande d'angle de roue avant/arrière de véhicule comportant une unité pour commander respectivement de manière indépendante des angles de roue avant/arrière, le système comprenant:

une partie de calcul de rayon de virage cible (201) pour calculer un rayon de virage cible sur la base d'une valeur d'opération de direction;
une partie de calcul de position de centre de virage cible (202) pour calculer une position de centre de virage cible pendant le virage du véhicule; et
une partie de calcul de valeur de commande d'angle de roue avant/arrière (203) pour calculer des valeurs de commande des angles de roue avant/arrière de manière à réaliser la position de centre de virage cible,

**caractérisé en ce que** la partie de calcul de position de centre de virage cible (202) calcule la position de centre de virage cible sur la base du rayon de virage cible en tant que position sur une ligne droite qui intersecte orthogonalement une ligne d'axe longitudinal du véhicule et qui passe par l'extrémité arrière du véhicule de manière à restreindre une valeur d'avancée d'une partie d'extrémité arrière dans des directions de surface de côté droit/gauche pendant le virage du véhicule.

**2.** Système de commande d'angle de roue avant/arrière de véhicule selon la revendication 1, dans lequel la partie de calcul de position de centre de virage cible (202) calcule la position de centre de virage cible en tant que position sur la ligne droite qui intersecte orthogonalement la ligne d'axe longitudinal d'un véhicule et qui passe par l'extrémité arrière du véhicule au niveau d'une étape initiale du virage du véhicule et en tant que position qui se déplace progressivement dans la direction vers l'avant du véhicule au fil de la progression du virage.

**3.** Système de commande d'angle de roue avant/arrière de véhicule selon la revendication 2, dans lequel la partie de calcul de position de centre de virage cible (202) calcule la position de centre de virage cible en tant que position sur la ligne droite qui intersecte orthogonalement la ligne d'axe longitudinal du véhicule et qui passe par l'extrémité arrière du véhicule au niveau de l'étape initiale du virage du véhicule et en tant que position qui se déplace progressivement sur une ligne droite qui est parallèle à un essieu avant et à un essieu arrière et qui présente une distance égale par rapport à chaque essieu au fil de la progression du virage.

4. Système de commande d'angle de roue avant/arrière de véhicule selon la revendication 2, dans lequel la partie de calcul de position de centre de virage cible (202) calcule la position de centre de virage cible en tant que position sur la ligne droite qui intersecte orthogonalement la ligne d'axe longitudinal du véhicule et qui passe par l'extrémité arrière du véhicule au niveau de l'étape initiale du virage du véhicule et en tant que position qui se déplace de manière à faire coïncider un lieu d'un point d'extrémité arrière de côté droit ou gauche du véhicule avec une tangente de côté droit ou gauche du véhicule au niveau de l'étape initiale du virage.

5. Système de commande d'angle de roue avant/arrière de véhicule selon la revendication 2, dans lequel la partie de calcul de position de centre de virage cible (202) calcule la position de centre de virage cible en tant que position sur la ligne droite qui intersecte orthogonalement la ligne d'axe longitudinal du véhicule et qui passe par l'extrémité arrière du véhiculé au niveau de l'étape initiale du virage du véhicule et en tant que position qui se déplace progressivement dans la direction vers l'avant du véhicule sur la base d'une valeur de déplacement du véhicule au fil de la progression du virage.

6. Système de commande d'angle de roue avant/arrière de véhicule selon la revendication 2, dans lequel la partie de calcul de position de centre de virage cible (202) calcule la position de centre de virage cible en tant que position sur la ligne droite qui intersecte orthogonalement la ligne d'axe longitudinal du véhicule et qui passe par l'extrémité arrière du véhicule au niveau de l'étape initiale du virage du véhicule et en tant que position qui se déplace dans la direction vers l'avant du véhicule d'une distance qui est égale à une valeur de déplacement d'un point de centre de gravité du véhicule au fil de la progression du virage.

7. Système de commande d'angle de roue avant/arrière de véhicule selon la revendication 2, dans lequel la partie de calcul de position de centre de virage cible (202) calcule la position de centre de virage cible en tant que position sur la ligne droite qui intersecte orthogonalement la ligne d'axe longitudinal du véhicule et qui passe par l'extrémité arrière du véhicule au niveau de l'étape initiale du virage du véhicule et en tant que position qui se déplace dans la direction vers l'avant du véhicule à l'intérieur d'une valeur de déplacement d'un point de centre de gravité du véhicule en tant que limite supérieure au fil de la progression du virage.

8. Système de commande d'angle de roue avant/arrière de véhicule selon la revendication 2, dans lequel la partie de calcul de position de centre de virage cible (202) calcule la position de centre de virage cible en tant que position sur la ligne droite qui intersecte orthogonalement la ligne d'axe longitudinal du véhicule et qui passe par l'extrémité arrière du véhicule au niveau de l'étape initiale du virage du véhicule et en tant que position qui se déplace progressivement dans la direction vers l'avant du véhicule sur la base d'une posture du véhicule au fil de la progression du virage.

9. Système de commande d'angle de roue avant/arrière de véhicule selon la revendication 2, dans lequel la partie de calcul de position de centre de virage cible (202) calcule la position de centre de virage cible en tant que position sur la ligne droite qui intersecte orthogonalement la ligne d'axe longitudinal du véhicule et qui passe par l'extrémité arrière du véhicule au niveau de l'étape initiale du virage du véhicule et en tant que position qui se déplace dans la direction vers l'avant du véhicule d'une distance qui est obtenue en multipliant une distance entre la position de centre de virage cible au niveau de l'étape initiale du virage et un point d'extrémité arrière de côté droit ou gauche du véhicule par une variation d'un angle de lacet du véhicule, au fil de la progression du virage.

10. Système de commande d'angle de roue avant/arrière de véhicule selon la revendication 2, dans lequel la partie de calcul de position de centre de virage cible (202) calcule la position de centre de virage cible en tant que position sur la ligne droite qui intersecte orthogonalement la ligne d'axe longitudinal du véhicule et qui passe par l'extrémité arrière du véhicule au niveau de l'étape initiale du virage du véhicule et en tant que position qui se déplace dans la direction vers l'avant du véhicule à l'intérieur d'une distance qui est obtenue en multipliant une distance entre la position de centre de virage cible au niveau de l'étape initiale du virage et un point d'extrémité arrière de côté droit ou gauche du véhicule par une variation d'un angle de lacet du véhicule, en tant que limite supérieure au fil de la progression du virage.

**11.** Système de commande d'angle de roue avant/arrière de véhicule selon la revendication 2, dans lequel la partie de calcul de position de centre de virage cible (202) établit la position de centre de virage cible en une position qui est localisée à l'avant en lieu et place de la ligne droite qui intersecte orthogonalement la ligne d'axe longitudinal du véhicule et qui passe par l'extrémité arrière du véhicule, conformément à un profil à proximité de la partie d'extrémité arrière du véhicule au niveau de l'étape initiale du virage du véhicule.

**12.** Système de commande d'angle de roue avant/arrière de véhicule selon l'une quelconque des revendications précédentes, dans lequel la partie de calcul de position de centre de virage cible (202) calcule la position de centre de virage cible sur la base d'un système de coordonnées fixe par rapport au véhicule.

**13.** Procédé de commande d'angle de roue avant/arrière de véhicule utilisant une unité pour commander respectivement de manière indépendante des angles de roue avant/arrière, le procédé comprenant:

le calcul d'un rayon de virage cible sur la base d'une valeur d'opération de direction (étape 303);
le calcul d'une position de centre de virage cible pendant le virage du véhicule (étape 304); et
le calcul de valeurs de commande des angles de roue avant/arrière de manière à réaliser la position de centre de virage cible (étape 305),

**caractérisé en ce que** la position de centre de virage cible est calculée sur la base du rayon du virage cible en tant que position sur une ligne droite qui intersecte orthogonalement une ligne d'axe longitudinal du véhicule et qui passe par l'extrémité arrière du véhicule de manière à restreindre une valeur d'avancée d'une partie d'extrémité arrière dans des directions de surface de côté droit/gauche pendant le virage du véhicule.

**14.** Procédé de commande d'angle de roue avant/arrière de véhicule selon la revendication 13, dans lequel la position de centre de virage cible est calculée en tant que position sur la ligne droite qui intersecte orthogonalement la ligne d'axe longitudinal d'un véhicule et qui passe par l'extrémité arrière du véhicule au niveau d'une étape initiale d'un virage du véhicule et en tant que position qui se déplace progressivement dans la direction vers l'avant du véhicule au fil de la progression du virage.

**15.** Système de commande d'angle de roue avant/arrière de véhicule comportant une unité pour commander respectivement de manière indépendante un angle de virage de roue des roues avant et un angle de virage de roue des roues arrière, le système comprenant:

une partie de calcul de rayon de virage cible (1401) pour calculer un rayon de virage cible (Re) d'un point de référence (P) sur un véhicule sur la base d'une valeur d'opération de direction;
une partie de calcul d'angle de posture cible (1402) pour calculer un angle de posture cible ($\beta$) du point de référence (P); et
une partie de calcul d'angle de virage de roue cible (1403) pour calculer des angles de virage de roue cibles de roues avant/arrière sur la base du rayon de virage cible (Re) et de l'angle de posture cible ($\beta$),

**caractérisé en ce que** la partie de calcul d'angle de virage de roue cible (1403) calcule les angles de virage de roue cibles des roues avant/arrière en corrigeant les angles de virage de roue cible de manière à faire en sorte qu'un point de centre de virage de roue (Q) arrive sur le véhicule par rapport aux angles de virage de roue cibles des roues avant/arrière obtenus lorsque l'angle de posture cible est fixé à une valeur constante tandis que l'angle de posture cible ($\beta$) est augmenté et en corrigeant les angles de virage de roue cible de manière à faire en sorte que le point de centre de virage de roue (Q) s'éloigne du véhicule par rapport aux angles de virage de roue cible des roues avant/arrière obtenus lorsque l'angle de posture cible est fixé à une valeur constante tandis que l'angle de posture cible ($\beta$) est diminué.

**16.** Système de commande d'angle de roue avant/arrière de véhicule selon la revendication 15, dans lequel la partie de calcul d'angle de virage de roue cible (1403) calcule l'angle de virage de roue cible de telle sorte qu'un rayon de centre de virage de roue (R) soit sensiblement obtenu par $1/R = 1/Re + \delta\beta/\delta z$ conformément au rayon de virage cible (Re) et à une variation ($\delta\beta/\delta z$) de l'angle de posture cible ($\beta$) par rapport à une distance de déplacement ($\delta z$) du point de référence (P) du véhicule et de telle sorte qu'un point (Q) au niveau duquel un angle d'élévation de centre de virage de roue ($\theta$) est sensiblement égal à l'angle de posture cible ($\beta$) soit établi en tant que point de centre de virage de roue.

**17.** Système de commande d'angle de roue avant/arrière de véhicule selon la revendication 15, dans lequel la partie de calcul d'angle de virage de roue cible (1403) calcule l'angle de posture cible de manière à ne pas modifier brutalement une variation (δβ/δz) de l'angle de posture cible (β) par rapport à une distance de déplacement (δz) du point de référence (P).

**18.** Système de commande d'angle de roue avant/arrière d'un véhicule selon la revendication 15, comprenant en outre au moins un capteur de vitesse pour émettre en sortie une impulsion chaque fois qu'un certain point sur le véhicule se déplace d'une distance prédéterminée; et
dans lequel la partie de calcul d'angle de virage de roue cible (1403) exécute un calcul en synchronisation avec l'impulsion du capteur de vitesse.

**19.** Système de commande d'angle de roue avant/arrière de véhicule selon la revendication 15, comprenant en outre une partie de détection de vitesse de véhicule pour détecter une vitesse de déplacement du véhicule; et
dans lequel la partie de calcul d'angle de virage de roue cible (1403) calcule l'angle de virage de roue cible en un point (Q) auquel un rayon de centre de virage de roue (R) coïncide avec le rayon de virage cible (Re) et un angle d'élévation de centre de virage de roue (θ) est égal à l'angle de posture cible (β) indépendamment d'une direction de variation et d'un taux de variation de l'angle de posture cible dans un état qui peut être considéré en tant qu'état dans lequel le véhicule est pratiquement arrêté.

**20.** Système de commande d'angle de roue avant/arrière de véhicule selon la revendication 15, dans lequel la partie de calcul d'angle de virage de roue cible (1403) calcule l'angle de virage de roue cible pour restreindre une limite supérieure d'une variation (δθ/δz) d'un angle d'élévation de centre de virage de roue (θ) par rapport à une distance de déplacement (δz) du point de référence (P) conformément à l'angle de posture cible (β) et au rayon de virage cible (Re).

**21.** Procédé de commande d'angle de roue avant/arrière de véhicule pour commander respectivement de manière indépendante un angle de virage de roue de roues avant et un angle de virage de roue de roues arrière, comprenant:

le calcul d'un rayon de virage cible (Re) d'un point de référence (P) sur un véhicule sur la base d'une valeur d'opération de direction (étape 1503);
le calcul d'un angle de posture cible (β) du point de référence (P) (étape 1504); et
le calcul d'angles de virage de roue cibles de roues avant/arrière sur la base du rayon de virage cible (Re) et de l'angle de posture cible (β) (étape 1505),

**caractérisé par** le calcul des angles de virage de roue cibles des roues avant/arrière en corrigeant les angles de virage de roue cibles de manière à faire en sorte qu'un point de centre de virage de roue (Q) arrive sur le véhicule par rapport aux angles de virage de roue cibles des roues avant/arrière obtenus lorsque l'angle de posture cible est fixé à une valeur constante tandis que l'angle de posture cible (b) est augmenté et en corrigeant les angles de virage de roue cibles de manière à faire en sorte que le point de centre de virage de roue (Q) s'éloigne du véhicule par rapport aux angles de virage de roue cibles des roues avant/arrière obtenus lorsque l'angle de posture cible est fixé à une valeur constante tandis que l'angle de posture cible (b) est diminué (étape 1505).

# FIG.1A
## PRIOR ART

$\begin{pmatrix} \text{WHERE} \\ 1[\text{deg}]=0.01745[\text{rad}] \end{pmatrix}$

RIGHT FRONT WHEEL

LEFT FRONT WHEEL

LEFT REAR WHEEL

RIGHT REAR WHEEL

STEERING ANGLE[deg]

50

0

-50

0  1  2  3  4  5  6  7  TIME[s]

# FIG.1B
## PRIOR ART

SIDE SLIP ANGLE OF THE VEHICLE[deg]

30

20

10

0

0  1  2  3  4  5  6  7  TIME[s]

# FIG.1C
## PRIOR ART

YAW RATE[deg/s]

60

40

20

0

0  1  2  3  4  5  6  7  TIME[s]

## FIG.2

## FIG.3

| 201 | 202 | 203 | 204 |
|-----|-----|-----|-----|
| TARGET TURNING RADIUS CALCULATION | TARGET TURNING CENTER POSITION CALCULATION | FRONT/REAR WHEEL ANGLE COMMAND VALUE CALCULATION | FRONT/REAR WHEEL ANGLE CONTROL |

# FIG.4

```
          ┌─────────┐
          │  START  │
          └─────────┘
               │
               ▼
   ┌───────────────────────────┐
   │  DETECT A STEERING ANGLE  │────301
   │  OF A STEERING WHEEL      │
   └───────────────────────────┘
               │
               ▼
   ┌───────────────────────────┐
   │  DETECT A VEHICLE SPEED   │────302
   └───────────────────────────┘
               │
               ▼
   ┌───────────────────────────┐
   │ CALCULATE A TARGET TURNING │───303
   │ RADIUS                     │
   └───────────────────────────┘
               │
               ▼
   ┌───────────────────────────┐
   │ CALCULATE A TARGET TURNING │───304
   │ CENTER POSITION            │
   └───────────────────────────┘
               │
               ▼
   ┌───────────────────────────┐
   │ CALCULATE COMMAND VALUES  │────305
   │ OF FRONT/REAR WHEEL ANGLES│
   └───────────────────────────┘
               │
               ▼
          ┌─────────┐
          │   END   │
          └─────────┘
```

# FIG.5

```
   ┌─────────────────────────┐
   │  TARGET  TURNING        │
   │  CENTER  POSITION       │────304-1
   │  CALCULATING  ROUTINE   │
   └─────────────────────────┘
               │
               ▼
            ╱───────╲                401
          ╱           ╲
        ╱   | δ | > ε ?  ╲ ─── NO ──────────┐
          ╲           ╱                      │
            ╲───────╱                        ▼
               │ YES                  ┌──────────────────┐  403
               ▼           402        │ STRAIGHT DRIVING │
   ┌──────────────────────┐           └──────────────────┘
   │      t×c=b           │                    │
   └──────────────────────┘                    │
               │◄───────────────────────────────┘
               ▼
          ┌─────────┐
          │ RETURN  │
          └─────────┘
```

# FIG.6

```
                                                    304-2
           ┌─────────────────────────────┐
           │  TARGET TURNING             │
           │  CENTER POSITION            │
           │  CALCULATING ROUTINE        │
           └─────────────────────────────┘
                          │
                          ▼              501
       NO          ╱─────────────────╲
     ┌───────────── │    | δ | > ε ?   │
     │             ╲─────────────────╱
     │      502            │ YES
     │                     ▼              503
  ┌──────────────────┐ ╱─────────────────╲    YES
  │ STRAIGHT DRIVING │ │  | δ old | > ε ? │──────────┐
  └──────────────────┘ ╲─────────────────╱          │
     │                     │ NO                       │        506
     │                     ▼              504    ┌──────────────────┐
     │              ┌──────────────────┐         │  h=hold+V×dt     │
     │              │     t×c=b        │         └──────────────────┘
     │              └──────────────────┘          │        507
     │                     │            505    ┌──────────────────┐
     │              ┌──────────────────┐         │   t×c=b+h        │
     │              │     hold=0        │         └──────────────────┘
     │              └──────────────────┘          │
     │                     │                       │
     └─────────────────────┼───────────────────────┘
                           ▼
                  ┌──────────────────┐
                  │     RETURN        │
                  └──────────────────┘
```

# FIG.7

```
                                            ⟋304-3
        ╭─────────────────────────────╮
        │  TARGET   TURNING           │
        │  CENTER   POSITION          │
        │  CALCULATING  ROUTINE       │
        ╰─────────────────────────────╯
                      │
                      ▼         ⟋601
     NO      ◇─────────────────────────◇
    ◀────────    │ δ │ > ε ?
             ◇─────────────────────────◇
 ⟋602              │ YES
╭──────────────────╮       ⟋603                         YES
│ STRAIGHT DRIVING │   ◇───────────────────◇──────────────────────┐
╰──────────────────╯       │ δ old │ > ε ?                         │
        │                  │ NO         ⟋604                   ⟋606│
        │          ╭───────────────────────╮       ╭──────────────────────────╮
        │          │      t×c=b            │       │  θ = θ old+yaw×dt        │
        │          ╰───────────────────────╯       ╰──────────────────────────╯
        │                  │            ⟋605                      │      ⟋607
        │          ╭───────────────────────╮       ╭──────────────────────────╮
        │          │      θ old=0          │       │     t×c=b+L× θ           │
        │          ╰───────────────────────╯       ╰──────────────────────────╯
        │                  │                                      │
        └──────────────────┼──────────────────────────────────────┘
                           ▼
                ╭───────────────────────╮
                │       RETURN          │
                ╰───────────────────────╯
```

# FIG.8

TURNING CENTER O
(Xc,Yc)

# FIG.9

# FIG.10

# FIG.11A

$\begin{pmatrix} \text{WHERE} \\ 1[\text{deg}]=0.01745[\text{rad}] \end{pmatrix}$

RIGHT FRONT
WHEEL

LEFT FRONT
WHEEL

STEERING ANGLE[deg]

40

20

0

-20

0   1   2   3   4   5   TIME[s]

RIGHT REAR
WHEEL

LEFT REAR
WHEEL

# FIG.11B

SIDE SLIP ANGLE OF THE VEHICLE[deg]

40

20

0

-20

0   1   2   3   4   5   TIME[s]

# FIG.11C

YAW RATE[deg/s]

20

10

0

0   1   2   3   4   5   TIME[s]

# FIG.12

## FIG.13A

$\left(\begin{array}{l}\text{WHERE} \\ 1[\text{deg}]=0.01745[\text{rad}]\end{array}\right)$

RIGHT FRONT WHEEL   LEFT FRONT WHEEL

STEERING ANGLE[deg]

RIGHT REAR WHEEL   LEFT REAR WHEEL

TIME[s]

## FIG.13B

SIDE SLIP ANGLE OF THE VEHICLE[deg]

TIME[s]

## FIG.13C

YAW RATE[deg/s]

TIME[s]

# FIG.14

TURNING
DIRECTION

$\begin{bmatrix} \text{VEHICLE-FIXED} \\ \text{COORDINATE SYSTEM} \end{bmatrix}$

(VEHICLE)

R1 = R2

R1 → WHEEL-TURNING
CENTER F1

REFERENCE
POINT P
$\begin{pmatrix} \text{CENTER OF} \\ \text{THE VEHICLE} \end{pmatrix}$

R2 → WHEEL-TURNING
CENTER S1

# FIG.15

WHEEL-TURNING CENTER
FROM A POINT C
TO A POINT D IN FIG.16
$\begin{pmatrix} \text{A VEHICLE POSTURE} \\ \text{ANGLE 25 DEGREE} \end{pmatrix}$

TRAVELING
DIRECTION

R1

MOVE GRADUALLY
THE TURNING CENTER
BETWEEN A POINT B
TO A POINT C IN FIG.16

25deg   R2

R1 = R2

WHEEL-TURNING CENTER
FROM A POINT A TO
A POINT B IN FIG.16
$\begin{pmatrix} \text{A VEHICLE POSTURE} \\ \text{ANGLE 0 DEGREE} \end{pmatrix}$

REFERENCE
POINT P
$\begin{pmatrix} \text{RIGHT FRONT} \\ \text{WHEEL} \end{pmatrix}$

$\begin{bmatrix} \text{VEHICLE-FIXED} \\ \text{COORDINATE SYSTEM} \end{bmatrix}$

34

# FIG.16

A VEHICLE EXTERNAL PROFILE AND
A LOCUS OF A REFERENCE POINT ARE DEPICTED

# FIG.17

# FIG.18

STEERING ANGLE → 

| 1401 | 1403 | 1404 |
|---|---|---|
| TARGET TURNING RADIUS CALCULATING PORTION | TARGET WHEEL-TURNING ANGLE CALCULATING PORTION | WHEEL-TURNING ANGLE ADJUSTING PORTION |

→ TO A MOTOR DRIVER CIRCUIT

1402
TARGET POSTURE ANGLE CALCULATING PORTION

REAL WHEEL-TURNING ANGLE

# FIG.19

START

DETECT A STEERING ANGLE OF A STEERING WHEEL — 1501

DETECT A VEHICLE SPEED — 1502

CALCULATE A TARGET TURNING RADIUS — 1503

CALCULATE A TARGET POSTURE ANGLE — 1504

CALCULATE A TARGET WHEEL-TURNING ANGLE — 1505

END

# FIG.20

1/TARGET TURNING RADIUS

STEERING WHEEL TURNING ANGLE

LEF T MAXIMUM TURNING ANGLE

RIGHT MAXIMUM TURNING ANGLE

# FIG.21

TARGET POSTURE ANGLE

VEHICLE TRAVELING DISTANCE

# FIG.22

A VEHICLE EXTERNAL PROFILE AND
A LOCUS OF A REFERENCE POINT ARE DEPICTED

# FIG.23

START OF A CALCULATING
ROUTINE 1 OF A TARGET
WHEEL-TURNING CENTER

↓ 1901

CALCULATE A TRAVELING DISTANCE
dz FROM THE PRECEDING JOB

↓ 1902

CALCULATE CHANGE d$\theta$ OF A TARGET
WHEEL-TURNING CENTER ELEVATION
ANGLE $\theta$ FROM THE PRECEDING JOB
d$\theta = \beta - \theta$ old

↓ 1903

CALCULATE A MINIMUM
WHEEL-TURNING CENTER RADIUS Rmin
BASED ON THE WHEEL-TURNING
CENTER ELEVATION ANGLE $\theta$ old
FROM THE PRECEDING JOB

↓ 1904

CALCULATE A MAXIMUM VALUE
d$\theta$ max OF THE CHANGE d$\theta$ OF THE
WHEEL-TURNING CENTER ELEVATION
ANGLE
d$\theta$ max=(1/Rmin-1/Re)×dz

↓ 1905

CALCULATE THE CHANGE d$\theta$ OF THE
WHEEL-TURNING CENTER ELEVATION
ANGLE
d$\theta$ =min(d$\theta$ max, d$\theta$ )

↓ 1906

CALCULATE THE WHEEL-TURNING
CENTER ELEVATION ANGLE $\theta$ AND
A FINAL TARGET POSTURE ANGLE
$\theta = \theta$ old+d$\theta$ , $\beta = \theta$

↓ 1907

CALCULATE A WHEEL-TURNING
CENTER RADIUS R
R=1/(d$\theta$ /dz+1/Re)

↓

END OF THE CALCULATING
ROUTINE 1 OF THE TARGET
WHEEL-TURNING CENTER

## FIG.24

START OF A CALCULATING ROUTINE 2 OF THE TARGET WHEEL-TURNING CENTER

IS THERE NO SPEED PULSE CONTINUOUSLY FOR T1 SECONDS OR IS A DIRECTION OF THE WHEEL-TURNING ANGLE REVERSED? — 2001

NO

YES

CALCULATE THE WHEEL-TURNING CENTER ELEVATION ANGLE $\theta$
$\theta = \beta$ — 2002

CALCULATE THE WHEEL-TURNING CENTER RADIUS R
R=Re — 2003

END OF THE CALCULATING ROUTINE 2 OF THE TARGET WHEEL-TURNING CENTER

## FIG.25

X AXIS

WHEEL-TURNING ANGLE (RIGHT FRONT WHEEL)

$\delta$ fr

(VEHICLE)

WHEEL-TURNING CENTER

Y AXIS

THIS FIGURE IS IN A RIGHTWARD TURNING

[A VIEW VIEWED FROM THE TOP OF THE VEHICLE]

# FIG.26

## FIG.27

X AXIS

MAXIMUM
WHEEL-TURNING
ANGLE

Rmin
POINT V

WHEEL-TURNING
CENTER

$\theta$ old

(POINT P)

Y AXIS

AVAILABLE RANGE OF
THE WHEEL-TURNING CENTER

MAXIMUM
WHEEL-TURNING
ANGLE

THIS FIGURE IS IN A
RIGHTWARD TURNING

$\begin{bmatrix} \text{A VIEW VIEWED FROM THE} \\ \text{TOP OF THE VEHICLE} \end{bmatrix}$

## FIG.28

X AXIS

TRAVELING
DIRECTION

WHEEL-TURNING
ANGLE
(RIGHT FRONT WHEEL) $\delta$ fr

POSTURE
ANGLE
$\beta$

WHEEL-TURNING
CENTER RADIUS R

WHEEL-TURNING
CENTER(POINT Q)

(VEHICLE)

REFERENCE POINT
(POINT P)

WHEEL-TURNING
CENTER
ELEVATION ANGLE $\theta$

Y AXIS

THIS FIGURE IS IN A
RIGHTWARD TURNING

$\begin{bmatrix} \text{A VIEW VIEWED FROM THE} \\ \text{TOP OF THE VEHICLE} \end{bmatrix}$

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 62125952 A